# EUROPÄISCHE PATENTSCHRIFT

(11) **EP 3 705 996 B1**
(45) Veröffentlichungstag und Bekanntmachung des Hinweises auf die Patenterteilung: **01.11.2023**
(21) Anmeldenummer: 20166685.6
(22) Anmeldetag: 21.09.2018
(51) Int. Cl.: G06F 9/50

(54) **VERFAHREN ZUR NUTZUNG EINER RECHNEREINHEIT SOWIE FAHRZEUG**
METHOD FOR USING A COMPUTER UNIT AND VEHICLE
PROCÉDÉ D'UTILISATION D'UNE UNITÉ DE CALCUL ET VÉHICULE CORRESPONDANT

(30) Priorität: 25.09.2017 DE 102017008956
(43) Veröffentlichungstag der Anmeldung: 09.09.2020
(62) Teilanmeldung aus: 18786671.0
(73) Patentinhaber: Mercedes-Benz Group AG, 70372 Stuttgart (DE)
(72) Erfinder: Weber, Thomas, 71083 Herrenberg (DE)
(74) Vertreter: Novagraaf Group

(56) Entgegenhaltungen:
- CN-A- 112 997 154
- DE-A1-102016 004 851
- JP-A- 2007 099 161
- US-A1- 2002 188 384
- US-A1- 2015 112 507
- EUN-KYU LEE ET AL: "Internet of Vehicles: From intelligent grid to autonomous cars and vehicular fogs", INTERNATIONAL JOURNAL OF DISTRIBUTED SENSOR NETWORKS, Bd. 12, Nr. 9, September 2016 (2016-09), XP055540271, ISSN: 1550-1477, DOI: 10.1177/1550147716665500
- MARIO GERLA ET AL: "Internet of vehicles: From intelligent grid to autonomous cars and vehicular clouds", 2014 IEEE WORLD FORUM ON INTERNET OF THINGS (WF-IOT), März 2014 (2014-03), Seiten 241-246, XP055540229, DOI: 10.1109/WF-IoT.2014.6803166 ISBN: 978-1-4799-3459-1
- Albert Y.S. Lam ET AL: "Coordinated Autonomous Vehicle Parking for Vehicle-to-Grid Services: Formulation and Distributed Algorithm", IEEE Transactions on Smart Grid, vol. 9, no. 5, 1 September 2018 (2018-09-01), pages 4356-4366, XP055540280, USA ISSN: 1949-3053, DOI: 10.1109/TSG.2017.2655299

## Beschreibung

Die Erfindung betrifft ein Verfahren zur Nutzung einer Rechnereinheit eines autonom bewegbaren Fahrzeuges. Die Erfindung betrifft auch ein Fahrzeug, insbesondere ein Kraftfahrzeug.

Aus der WO 2017/079222 A1 ist eine Softwareanwendung zur Anfrage und Steuerung eines autonomen Fahrzeugservice bekannt. Die Softwareanwendung sieht vor, dass eine Fahranforderung von einem Benutzergerät empfangen wird, um einen Benutzer zu einem Ziel von einem Herkunftsort durch einen autonomen Fahrzeugsystemdienst zu transportieren. Basierend auf dem Herkunftsort wird durch den autonomen Fahrzeugsystemdienst ein autonomes Fahrzeugsystem bestimmt, welches von dem Fahrzeugsystemdienst verwaltet wird. Anschließend wird die Fahrtanforderung dem autonomen Fahrzeugsystem bereitgestellt, wobei Informationen über das autonome Fahrzeugsystem an das Benutzergerät übermittelt werden.

Der wissenschaftliche Artikel "Internet of Vehicles: From intelligent grid to autonomous cars and vehicular fogs" von Eun-Kyu Lee et Al., International journal of distributed sensor networks, Band 12, Nr. 9, 1. September 2016, beschreibt, dass jüngste Fortschritte in den Bereichen Kommunikation, Steuerung und eingebettete Systeme die Wahrnehmung eines Autos verändert haben. Ein Fahrzeug ist die Erweiterung des ambulanten Systems, das den Befehlen des Fahrers gehorcht. Eine Sensorplattform, die Informationen aus der Umwelt (und von anderen Autos) aufnimmt, und sie an Fahrer und Infrastruktur weiterleitet, um diese Navigation, die Schadstoffbekämpfung und das Verkehrsmanagement unterstützt. Als Vorreiter des Google-Autos wird das Internet der Fahrzeuge ein verteiltes Transportgefüge sein, das in der Lage ist, seine eigenen Entscheidungen über die Anreise der Kunden zu ihren Zielen zu treffen. Wie andere wichtige Instanzen des Internets der Dinge, zum Beispiel das intelligente Gebäude, wird das Internet der Fahrzeuge über Kommunikations-, Speicher-, Intelligenz- und Lernfähigkeiten verfügen, um die Absichten der Kunden vorweg zu nehmen. Das Konzept, das den Übergang zum Internet der Fahrzeuge erleichtern wird, ist der Fahrzeugnebel, das Äquivalent einer momentanen Internet-Wolke für Fahrzeuge, die alle von den autonomen Fahrzeugen benötigten Dienste bereitstellt.

Die US 2015/0112507 A1 offenbart eine Technik für den Betrieb eines fahrzeugmontierbaren Steuergeräts, das an einem Fahrzeug montiert ist und zur Steuerung zumindest eines Teils des Fahrzeugbetriebs verwendet wird. Das fahrzeugmontierbare Steuergerät kann als Netzwerkelement in einem Computernetzwerk verwendet werden. Eine freie Steuergerät-Ressource des fahrzeugmontierbaren Steuergeräts ist für die Fernverarbeitung im Computernetzwerk vorgesehen. Die Technik umfasst eine Bestimmung eines Betriebsmodus des Fahrzeugs, in dem das fahrzeugmontierbare Steuergerät montiert ist, und die Durchführung eines Tests, um zu bestimmen, ob das fahrzeugmontierbare Steuergerät als Netzwerkelement im Computernetzwerk verwendet werden soll, basierend auf dem Betriebsmodus des Fahrzeugs zu einem Zeitpunkt, an dem der Test durchgeführt wird.

Die DE 10 2016 004 851 A1 beschreibt ein Kraftfahrzeug mit einem elektrischen Antriebsmotor, einer Traktionsbatterie zum Antrieb des elektrischen Antriebsmotors, eine Ladeeinrichtung zum Laden des Traktionsbatterie und einer Kühleinrichtung insbesondere zum Kühlen der Traktionsbatterie, wobei das Kraftfahrzeug Mittel zum Übertragen von Wärme, die beim Ladevorgang der Traktionsbatterie entsteht, auf ein fahrzeugexternes Wärmewassersystem aufweist.

Der Artikel "Coordinated Autonomous Vehicle Parking for Vehicle to Grid Services: Formulation and Distributed Algorithm" von Y.S. Albert, IEEE Transactions on Smart Grid, Vol. 9, No. 5, Sept. 2018, beschreibt ein autonomes Elektrofahrzeug das V2G Dienste bereitstellt.

Der Erfindung liegt die Aufgabe zugrunde, ein gegenüber dem Stand der Technik verbessertes Verfahren zur Nutzung einer Rechnereinheit eines autonom bewegbaren Fahrzeuges und ein besonders vorteilhaft nutzbares, autonom bewegbares Fahrzeug anzugeben.

Die Aufgabe wird erfindungsgemäß durch die in Anspruch 1 angegebenen Merkmale und durch die in Anspruch 12 angegebenen Merkmale gelöst. Vorteilhafte Ausgestaltungen der Erfindung sind Gegenstand der Unteransprüche.

Ein Verfahren zur Nutzung einer Rechnereinheit eines autonom bewegbaren Fahrzeuges sieht erfindungsgemäß vor, dass bei einem Ladevorgang eines elektrischen Energiespeichers des Fahrzeuges eine Rechenleistung der Rechnereinheit zumindest einem fahrzeugexternen Rechennetzwerk und/oder einem Verbund von fahrzeugexternen Recheneinheiten zur Verfügung gestellt wird.

Durch Anwendung des Verfahrens können im Fahrzeug vorhandene Ressourcen bei Nichtnutzung, insbesondere beim Laden des elektrischen Energiespeichers des Fahrzeuges, genutzt werden, wodurch eine Wirtschaftlichkeit des Fahrzeuges gesteigert werden kann.

Zudem kann mittels der Bereitstellung der Rechnereinheit, welche eine hochleistungsfähige Rechnereinheit darstellt, ein gesellschaftlicher Nutzen eines autonomen Fahrbetriebes erhöht werden.

Darüber hinaus besteht durch die Anwendung des Verfahrens die Möglichkeit einer intelligenten Flottennutzung, wobei das Fahrzeug Mitglied in einer Fahrzeugflotte ist und kommerziell genutzt wird.

Die Erfindung zeichnet sich dadurch aus, dass während zumindest eines Teils des Ladevorgangs der Energiespeicher des Fahrzeugs elektrische Energie aus dem zuvor genannten, bezüglich des Fahrzeugs externen Stromnetz empfängt und, insbesondere in sich, speichert. Somit ist unter dem Ladevorgang insbesondere zu verstehen, dass durch den Ladevorgang die in dem Energiespeicher gespeicherte Menge an elektrischer Energie erhöht wird. Hierzu empfängt das Fahrzeug beziehungsweise der Energiespeicher elektrische Energie, die von dem Stromnetz bereitgestellt wird. Die von dem Stromnetz bereitgestellte elektrische Energie wird in dem Energiespeicher gespeichert.

Das Fahrzeug, insbesondere der Energiespeicher, ist während des Ladevorgangs zumindest mittelbar über wenigstens eine physische Stromleitung mit dem Stromnetz zumindest elektrisch verbunden. Hierzu ist die Stromleitung beispielsweise einerseits, insbesondere direkt, dem Fahrzeug und andererseits mit einer Ladeeinrichtung, insbesondere mit einer Ladesäule, zumindest elektrisch verbunden. Über die Stromleitung wird die von dem Stromnetz bereitgestellte elektrische Energie auf das Fahrzeug und insbesondere auf den Energiespeicher übertragen, und der Energiespeicher empfängt die elektrische Energie. Ein gegenüber Null größerer, erster Teil der von dem Stromnetz bereitgestellten elektrischen Energie kann beispielsweise in dem Energiespeicher gespeichert werden, um den Energiespeicher aufzuladen. Ein gegenüber Null größerer, zweiter Teil der von dem Stromnetz bereitgestellten Energie kann beispielsweise genutzt werden, um die Rechnereinheit des Fahrzeugs zu betreiben, sodass die Rechenleistung der Rechnereinheit dem Rechennetzwerk beziehungsweise dem Verbund zur Verfügung gestellt werden kann. Durch die zuvor beschriebene Priorisierung beziehungsweise durch die Berücksichtigung der prädiktiven Daten können die jeweiligen Teile der elektrischen Energie, insbesondere die jeweilige Größen beziehungsweise Werte der Teile der elektrischen Energie, eingestellt werden, sodass der Energiespeicher besonders bedarfsgerecht geladen werden kann, insbesondere derart, dass das Fahrzeug zu dem beschriebenen zweiten Zeitpunkt, das heißt nach dem Ladevorgang und nach dem Bereitstellen der Rechenleistung einen gewünscht Zustand aufweist. Die genannten Teile der elektrischen Energie werden vorzugsweise auch dokumentiert, insbesondere für die zuvor beschrieben Abrechnung und/oder Verrechnung.

Weiterhin ist vorgesehen, dass während zumindest eines Teils des Ladevorgangs der Energiespeicher des Fahrzeugs elektrische Energie in ein bezüglich des Fahrzeugs externes Stromnetz beziehungsweise in das zuvor genannten Stromnetz einspeist. Somit ist vorzugsweise ein bidirektionales Laden beziehungsweise ein bidirektionaler Ladevorgang vorgesehen, in dessen Rahmen der Energiespeicher elektrische Energie aus dem Stromnetz empfangen und in sich speichern sowie in sich bereits gespeicherte elektrische Energie bereitstellen und in das Stromnetz einspeisen kann. Das Einspeisen von in dem Energiespeicher gespeicherter elektrischer Energie in das Stromnetz kann insbesondere dann vorteilhaft sein, wenn eine besonders große Menge an elektrischer Energie in dem Energiespeicher gespeichert ist und ein zukünftiger, erwarteter Fahrtbeginn des Fahrzeugs erst in relativ ferner Zukunft erfolgt. Vorzugsweise erfolgt das Einspeisen von elektrischen Energien in das Stromnetz gegen ein Entgelt, das das Fahrzeug beziehungsweise des Nutzer erhält, da das Fahrzeug elektrische Energie, die zunächst in dem elektrischen Energiespeicher gespeichert ist, in das Stromnetz einspeist. Hierdurch wird die in dem Energiespeicher gespeicherte Menge an elektrischer Energie verringert. Das Einspeisen an elektrischer Energie in das Stromnetz kann beispielsweise während solcher Zeitspannen erfolgen, während welchen das Entgelt, das der Nutzer für das Einspeisen von elektrischer Energie in das Stromnetz erhält, besonders hoch ist.

Um zu Fahrbeginn einen vorteilhaften Ladezustand des Energiespeichers gewährleisten zu können, kann vorgesehen sein, dass der Energiespeicher - nachdem er elektrische Energie in das Stromnetz eingespeist hat - elektrische Energie aus dem Stromnetz empfängt und in sich speichert, insbesondere während wenigstens einer solchen Zeitspanne, während welcher ein Einspeisen von elektrischer Energie in das Stromnetz unentgeltlich oder gegen ein nur geringes Entgelt erfolgt. Zum einen kann hierdurch das Stromnetz vorteilhaft unterstützt beziehungsweise stabilisiert werden. Andererseits kann der Nutzer von der Stabilisierung des Stromnetzes profitieren, da er für das Einspeisen ein Entgelt erhält.

Ferner ist vorgesehen, dass der Energiespeicher in Abhängigkeit von einem Preis für aus dem Stromnetz entnommene Energie und/oder in Abhängigkeit von einem Preis für in das Stromnetz eingespeiste Energie während des Teils des Ladevorgangs die elektrische Energie von dem Stromnetz empfängt und/oder in das Stromnetz einspeist.

Beispielsweise können die folgenden vier Funktionen oder Aktivitäten vorgesehen sein: Eine erste der Funktionen ist ein Fahrdienst, welcher von dem autonom bewegbaren Fahrzeug erbracht werden kann. Eine zweite der Funktionen ist ein sogenanntes Grid-Computing (Netzberechnung), welches von dem Fahrzeug, insbesondere von der Rechnereinheit erbracht werden kann. Eine dritte der Funktionen ist das Laden des Energiespeichers, in den im Rahmen des Ladens elektrische Energie, die beispielsweise von dem Stromnetz bereitgestellt wird, eingespeichert wird. Die vierte Funktion ist ein Dienst des Fahrzeugs, insbesondere des Energiespeichers, als ein Stromspeicher oder als ein Strompuffer.

Unter dem Fahrdienst ist zu verstehen, dass das Fahrzeug zum Transport wenigstens einer Person, mehrerer Personen und/oder zum Transport von Transportgut genutzt werden kann. Unter dem Grid-Computing ist zu verstehen, dass das Fahrzeug die Rechenleistung der Rechnereinheit dem Rechennetzwerk beziehungsweise dem Verbund bereitstellt. Unter dem Laden ist zu verstehen, dass der Energiespeicher elektrische Energie aus dem Stromnetz empfangen und in sich speichert. Unter dem Dienst als Stromspeicher oder Strompuffer ist zu verstehen, dass der Energiespeicher elektrische Energie in das Stromnetz einspeisen kann oder einspeist. Eine Planung der vier Funktionen erfolgt beispielsweise auf Basis der prädiktiven Daten und dabei in Abhängigkeit von Erfahrungswerten und/oder auf Basis einer zentralisierten Planung und/oder auf Basis einer dezentralen oder zentralen künstlichen Intelligenz. Zur Planung beziehungsweise zum Durchführen der vier Funktionen (Aktivitäten) werden beispielsweise Navigationsdaten und/oder eine Ladesäule-Nutzungsprädiktion und/oder Verkehrs- und Kundenprognosedaten genutzt, um die Aktivitäten zu optimieren. Unter der Ladesäule-Nutzungsprädiktion ist beispielsweise eine Vorhersage oder Voraussage über eine erwartete beziehungsweise geschätzte Nutzung wenigstens einer Ladeeinrichtung zu verstehen, mittels welcher der Energiespeicher geladen werden kann beziehungsweise über welche das Fahrzeug elektrische Energie aus dem Stromnetz empfangen und/oder in das Stromnetz einspeisen kann. Die Ladesäule-Nutzungsprädiktion erfolgt beispielsweise in Abhängigkeit von dem Ladezustand des Energiespeichers, das heißt in Abhängigkeit von der, insbesondere aktuell und/oder zukünftig, in dem Energiespeicher gespeicherten Menge an elektrischer Energie oder in Abhängigkeit von geplanten oder zu erwartenden künftigen Fahrten. Hierfür können etwa Daten aus dem Navigationssystem oder dem elektronischen Kalender verwendet, insbesondere ausgewertet, werden.

Besonders vorteilhaft erfolgt eine jeweilige Gewichtung der jeweiligen Funktionen in Abhängigkeit von jeweiligen Wertigkeiten der jeweiligen Funktionen. Die Wertigkeit kann beispielsweise ein Preis oder ein Entgelt sein, den beziehungsweise das das Fahrzeug beziehungsweise dessen Eigentümer für die jeweilige Funktion erhält oder entrichten muss. Alternativ oder zusätzlich können die jeweiligen Funktionen in Abhängigkeit von einer jeweiligen Dringlichkeit der jeweiligen Funktionen gewichtet werden. Die Dringlichkeit beschreibt beispielsweise, wie schnell beziehungsweise in welcher Zeit das Fahrzeug von dem Startort entlang der Fahrroute zu dem Zielort gefahren werden muss oder soll, um beispielsweise, insbesondere spätestens, zu einem vorgegebenen oder vorgebbaren Zeitpunkt den Zielort zu erreichen. Ein weiteres Beispiel für eine Dringlichkeit ist eine Mindestladungsmenge des Energiespeichers, welche für geplante oder zu erwartende künftige Fahrten voraussichtlich benötigt werden wird. Durch die Gewichtung der Funktionen können die technischen Funktionen beziehungsweise Ressourcen des Fahrzeugs besonders effizient genutzt werden.

Die Erfindung zeichnet sich ferner dadurch aus, dass das Fahrzeug während des Ladevorgangs über wenigstens eine Kühlleitung wenigstens ein von einer bezüglich des Fahrzeugs externen Kühleinrichtung während des Ladevorgangs bereitgestelltes Kühlmedium empfängt, mittels welchem zumindest eine Komponente, insbesondere der Energiespeicher und/oder die Rechnereinheit, des Fahrzeugs während des Ladevorgangs gekühlt wird. Bei dem Kühlmedium handelt es sich beispielsweise um ein Gas, insbesondere Luft, oder um eine Flüssigkeit. Durch Kühlen der zumindest einen Komponente oder mehrerer Komponenten des Fahrzeugs können übermäßige und unerwünschte Temperaturen des Fahrzeugs vermieden werden.

Während des Ladevorgangs ist beispielsweise das Fahrzeug, insbesondere der Energiespeicher, über die zuvor genannte Stromleitung mit dem Stromnetz zumindest elektrisch verbunden. Vorzugsweise sind beispielsweise die Stromleitung und die Kühlleitung zu einer gemeinsamen Leitung zusammengefasst, sodass beispielsweise das Verbinden des Fahrzeugs mit dem Stromnetz mit dem Verbinden des Fahrzeugs mit der Kühleinrichtung gleichzeitig einhergehen kann. Insbesondere ist es denkbar, dass eine Gewichtung einer von der Kühleinrichtung beziehungsweise von dem auch als Kühlmittel bezeichneten Kühlmedium zu erbringenden Kühlleistung, insbesondere von jeweiligen Teilen der Kühlleistung, erfolgt. Dies bedeutet beispielsweise, dass ein erster Teil des Kühlmittels zum Kühlen der Rechnereinheit und ein zweiter Teil des Kühlmediums zum Kühlen des Energiespeichers und/oder wenigstens einer anderen, weiteren Komponente des Fahrzeugs genutzt wird. Durch die Gewichtung der Kühlleistung beziehungsweise der Teile kann entsprechend dort intensiv gekühlt werden, wo eine hohe Kühlleistung erforderlich ist, um übermäßige Temperaturen zu vermeiden. Die Gewichtung kann beispielsweise abhängig von einer gemessenen oder zu erwartenden Temperatur der Recheneinheit und/oder des Energiespeichers und/oder der wenigstens einen anderen, weiteren Komponente erfolgen. So kann die Kühlleistung etwa proportional zu den gemessenen Temperaturen der Recheneinheit und/oder des Energiespeichers und/oder der wenigstens einen anderen, weiteren Komponente gewichtet werden. Alternativ oder ergänzend kann die Gewichtung abhängig von zumindest einem Temperatur-Schwellenwert erfolgen, welcher etwa einer maximalen oder einer erwünschten oder einer vorteilhaften (etwa bezüglich Verschleiß oder Alterung) Betriebstemperatur der Recheneinheit und/oder des Energiespeichers und/oder der wenigstens einen anderen, weiteren Komponente entspricht. Mittels mehrerer Temperatur-Schwellenwerten kann auch eine gestufte Gewichtung der Kühlleistung erfolgen.

Bei einer vorteilhaften Ausführungsform der Erfindung wird mittels einer Anzahl von Rechnereinheiten autonom bewegbarer Fahrzeuge ein virtueller Hochleistungsrechner gebildet, der von einem Server zentral verwaltet wird. Der Server kann auch als Backend bezeichnet werden und ist eine bezüglich der Fahrzeuge externe, zusätzlich zu den Fahrzeugen vorgesehene elektronische Recheneinrichtung. Die vorigen und folgenden Ausführungen zu dem autonom bewegbaren Fahrzeug, welches im Rahmen des erfindungsgemäßen Verfahrens verwendet wird, können auch auf die anderen Fahrzeuge übertagen werden und umgekehrt. Das jeweilige Fahrzeug ist beispielsweise ein Kraftfahrzeug, insbesondere ein Kraftwagen, welcher als Personenkraftwagen ausgebildet sein kann. Das jeweilige Fahrzeug weist eine jeweilige Rechnereinheit auf, welche eine elektronische Rechnereinheit ist. Mittels der jeweiligen elektronischen Rechnereinheit kann das jeweilige Fahrzeug autonom bewegt, das heißt autonom beziehungsweise automatisch gefahren werden. Die Anzahl der Fahrzeuge ist vorzugsweise größer als 2 und vorzugsweise größer als 3. Die Fahrzeuge, deren Rechnereinheiten den virtuellen Hochleistungsrechner bilden, sind beispielsweise Fahrzeuge einer auch einfach als Flotte bezeichneten Fahrzeugflotte. Somit ist vorzugsweise vorgesehen, dass die Flotte beziehungsweise deren Fahrzeuge genutzt wird beziehungsweise werden, um aus den Rechnereinheiten der Fahrzeuge der Flotte den virtuellen Hochleistungsrechner zu bilden. Hierzu werden die Rechnereinheiten der Fahrzeuge beispielsweise über Kommunikationsverbindungen, insbesondere über das Internet, miteinander und/oder mit dem Server datentechnisch gekoppelt. Da die jeweilige Rechenleistung der jeweiligen Rechnereinheit besonders groß ist, um das jeweilige Fahrzeug autonom fahren zu können, kann eine besonders hohe Gesamtrechenleistung des virtuellen Hochleistungsrechners realisiert werden.

Das jeweilige Fahrzeug ist beispielsweise als Hybridfahrzeug oder als Elektrofahrzeug, insbesondere als batterieelektrisches Fahrzeug (BEV), ausgebildet. Das jeweilige Fahrzeug weist einen elektrischen Energiespeicher auf, mittels welchem elektrische Energie beziehungsweise elektrischer Strom gespeichert werden kann. Der jeweilige Energiespeicher ist vorzugsweise eine Hochvolt-Komponente, deren elektrische Spannung, insbesondere elektrische Betriebsspannung, vorzugsweise größer als 12 Volt ist und vorzugsweise mindestens 48 Volt beträgt. Vorzugsweise ist die elektrische Spannung, insbesondere die elektrische Betriebsspannung, größer als 50 Volt. Als besonders vorteilhaft hat sich gezeigt, wenn die elektrische Spannung, insbesondere die elektrische Betriebsspannung, des jeweiligen Energiespeichers mehrere hundert Volt beträgt. Hierdurch können besonders große elektrische Leistungen zum elektrischen Antreiben des jeweiligen Fahrzeugs realisiert werden.

Das jeweilige Fahrzeug weist beispielsweise wenigstens eine elektrische Maschine auf, mittels welcher das jeweilige Fahrzeug elektrisch angetrieben werden kann. Hierzu wird die elektrische Maschine in einem Motorbetrieb und somit als Elektromotor betrieben. Um die elektrische Maschine in dem Motorbetrieb zu betreiben, wird die elektrische Maschine mit elektrischer Energie versorgt, die in dem Energiespeicher gespeichert ist. Da das jeweilige Fahrzeug bei dem Ladevorgang beziehungsweise während des Ladevorgangs stillsteht, das heißt sich in einem Stillstand befindet und somit nicht bewegt, insbesondere nicht autonom bewegt beziehungsweise nicht autonom gefahren wird, kann durch das erfindungsgemäße Verfahren die jeweilige Rechnereinheit beziehungsweise deren Rechnerleistung, die während des Ladevorgangs herkömmlicherweise nicht genutzt wird, zumindest teilweise, insbesondere zumindest überwiegend oder vollständig, genutzt werden, indem die Rechenleistung dem Rechennetzwerk beziehungsweise dem Verbund bereitgestellt wird.

Es ist denkbar, dass bei dem Verfahren dem Rechennetzwerk beziehungsweise dem Verbund nur ein Teil der Rechenleistung zur Verfügung gestellt, das heißt bereitgestellt wird, die beim oder zum autonomen Fahren beziehungsweise Bewegen des Fahrzeugs genutzt wird. Ferner ist es denkbar, dass die gesamte Rechenleistung, die beim autonomen Fahren genutzt wird, zur Verfügung gestellt beziehungsweise bereitgestellt wird. Des Weiteren ist es denkbar, dass die Rechenleistung, die von der Rechnereinheit bereitgestellt wird, größer als die Rechenleistung ist, die beim autonomen Fahren genutzt wird. Dies kann vorgesehen sein, da bei dem Bereitstellen der Rechenleistung elektrische Energie zum Betreiben der Rechnereinheit und/oder ein beispielsweise als Gas, insbesondere Luft, oder aber als Flüssigkeit ausgebildetes Kühlmittel, mittels welchem die Rechnereinheit beim Bereitstellen der Rechenleistung gekühlt werden kann oder gekühlt wird, in zumindest nahezu unbegrenzter Menge zur Verfügung steht. Dies ist beispielsweise im Hinblick auf die elektrische Energie der Fall, da die Rechenleistung während des Ladevorgangs bereitgestellt wird, während welchem das Fahrzeug, insbesondere die Rechnereinheit, elektrische Energie, mittels welcher die Rechnereinheit betrieben wird, von einer bezüglich des Fahrzeugs externen Energiequelle wie beispielsweise einem Stromnetz erhält, insbesondere über eine Ladeinfrastruktur wie beispielsweise eine Ladesäule. Eine erste Teilmenge der von der Energiequelle bereitgestellten elektrischen Energie kann zum Laden des Energiespeichers genutzt werden, indem die erste Teilmenge in den Energiespeicher eingespeichert wird. Eine zweite Teilmenge der von der Energiequelle bereitgestellten elektrischen Energie kann zum Betreiben der Rechnereinheit genutzt werden, sodass die Rechnereinheit betrieben werden und die Rechenleistung zur Verfügung stellen kann, ohne in dem Energiespeicher gespeicherte Energie zu nutzen.

Im Hinblick auf das Kühlmittel ist das Fahrzeug während des Ladevorgangs beispielsweise mit einer bezüglich des Fahrzeugs externen Kühleinrichtung verbunden, welche das Kühlmittel bereitstellt. Mittels des Kühlmittels wird die Rechnereinheit beispielsweise während des Ladevorgangs beziehungsweise während des Bereitstellens der Rechenleistung gekühlt. Dadurch kann die Rechnereinheit besonders intensiv gekühlt werden. In der Folge können übermäßige Temperaturen der Rechnereinheit vermieden werden, sodass die Rechenleistung bei dem Bereitstellen einen besonders hohen Wert annehmen kann, ohne dass es zu übermäßigen Temperaturen der Rechnereinheit kommt. Eine erste Teilmenge des Kühlmittels oder das gesamte Kühlmittel wird beispielsweise genutzt, um bei dem Bereitstellen der Rechenleistung die Rechnereinheit zu kühlen. Alternativ oder zusätzlich kann eine zweite Teilmenge des Kühlmittels genutzt werden, um während des Ladevorgangs den Energiespeicher zu kühlen.

Der Nutzung der Flotte liegt die Idee zu Grunde, dass aktuell vorgesehen wird, zunächst beziehungsweise in einem ersten Schritt nur Fahrzeuge einer Fahrzeugflotte, die sich nicht in privater Hand befindet, autonom beziehungsweise automatisch zu bewegen beziehungsweise zu fahren, um eine hohe Sicherheit gewährleisten zu können. Hierdurch können die Fahrzeuge, deren Rechnereinheiten den Hochleistungsrechner bilden, auf besonders einfache und vorteilhafte Weise verwaltet werden, insbesondere im Hinblick auf die Bildung des Hochleistungsrechners beziehungsweise im Hinblick darauf, die jeweilige Rechenleistung dem Rechennetzwerk beziehungsweise dem Verbund bereitstellen zu können. Selbstverständlich ist es jedoch ohne weiteres denkbar, ein Fahrzeug oder mehrere Fahrzeuge, das beziehungsweise die sich in privater Hand befindet beziehungsweise befinden, zu nutzen, um den Hochleistungsrechner zu bilden beziehungsweise um die Rechenleistung dem Rechennetzwerk beziehungsweise dem Verbund bereitzustellen.

Eine weitere Ausführungsform zeichnet sich dadurch aus, dass die Rechenleistung gegen Entgelt zur Verfügung gestellt wird. Dieser Ausführungsform liegt die Idee zu Grunde, dass das Fahrzeug, dessen Rechnungsleistung dem Rechennetzwerk beziehungsweise dem Verbund zur Verfügung gestellt wird, eine Leistung beziehungsweise einen Dienst erbringt, die beziehungsweise der zu vergüten ist. Somit erhält beispielsweise das Fahrzeug, insbesondere eine diesem zugeordnete Person oder Organisation (im Folgenden dessen Eigentümer genannt), welche etwa Eigentümer, Fahrer oder Nutzer sein kann, das Entgelt, da der Eigentümer sein Fahrzeug bereitstellt, derart, dass das die Rechenleistung der Rechnereinheit des Fahrzeugs dem Rechennetzwerk beziehungsweise dem Verbund bereitgestellt wird. Das Entgelt ist somit eine Vergütung, die der Eigentümer dafür hält, dass der Eigentümer sein Fahrzeug für das Rechennetzwerk beziehungsweise für den Verbund bereitstellt. Der Eigentümer, der Aufwendungen beispielsweise für die Anschaffung, die Instandhaltung und den Betrieb des Fahrzeugs zu tragen hat, erhält somit dafür, dass er dem Rechennetzwerk beziehungsweise dem Verbund die Rechenleistung der Rechnereinheit des Fahrzeugs bereitstellt, eine Vergütung beziehungsweise eine Gegenleistung in Form des Entgelts.

Das Fahrzeug kann beispielsweise Leistungen oder Dienste erbringen, das heißt bereitstellen oder Leisten. Bei einer solchen, von dem Fahrzeug erbrachten Leistung beziehungsweise bei einem solchen, von dem Fahrzeug erbrachten Dienst kann es sich um das Bereitstellen der Rechenleistung, das heißt darum handeln, dass die Rechnereinheit dem Rechennetzwerk beziehungsweise dem Verbund die Rechenleistung zur Verfügung stellt. Bei einer weiteren, von dem Fahrzeug erbrachten Leistung beziehungsweise bei einem weiteren, von dem Fahrzeug erbrachten Dienst kann es sich um ein Einspeisen von in dem Energiespeicher gespeicherter elektrischer Energie in das bezüglich des Fahrzeug externe Stromnetz handeln. Mit anderen Worten kann im Rahmen des erfindungsgemäßen Verfahrens vorgesehen sein, dass das Fahrzeug, insbesondere der Energiespeicher, während des Ladevorgangs mit einem beziehungsweise mit dem bezüglich des Fahrzeugs externen Stromnetz elektrisch verbunden ist, wobei das Stromnetz elektrische Energie bereitstellen kann, die zum Laden des Energiespeichers und/oder zum Betreiben der Rechnereinheit und somit zum Bereitstellen der Rechenleistung genutzt wird. Alternativ oder zusätzlich dazu, dass das Fahrzeug, insbesondere der Energiespeicher und/oder die Rechnereinheit, elektrische Energie von dem Stromnetz empfängt beziehungsweise nutzt, um den Energiespeicher zu laden und/oder um die Rechnereinheit zu betreiben, kann vorgesehen sein, dass im Energiespeicher gespeicherte elektrische Energie von dem Energiespeicher bereitgestellt und in das Stromnetz eingeleitet, das heißt eingespeist wird. Dieses Einspeisen kann erfolgen, während die Rechenleistung der Rechnereinheit dem Rechennetzwerk beziehungsweise dem Verbund zur Verfügung gestellt wird. Der Energiespeicher wird somit als ein Puffer zum Ausgleichen oder Puffern des Stromnetzes genutzt, was auch als Balancing bezeichnet wird. Das Einspeisen von elektrischer Energie aus dem Energiespeicher in das Stromnetz ist eine Leistung beziehungsweise ein Dienst, die beziehungsweise der von dem Fahrzeug, bei Bedarf auch während des Bereitstellens der Rechenleistung, erbracht wird.

Ferner kann das Fahrzeug Leistungen oder Dienste beziehen, empfangen oder nutzen. Bei einer solchen, von dem Fahrzeug genutzt Leistung kann es sich um von dem Stromnetz bereitgestellte elektrische Energie beziehungsweise elektrischen Strom handeln, die beziehungsweise von dem Fahrzeug genutzt wird, um den Energiespeicher zu laden und/oder die Rechnereinheit zu betreiben. Beispielsweise kann vorgesehen sein, dass das Fahrzeug während eines ersten Zeitintervalls elektrische Energie aus dem Energiespeicher in das Stromnetz einspeist. Während eines zweiten Zeitintervalls kann das Fahrzeug die Rechenleistung der Rechnereinheit zur Verfügung stellen. Das erste Zeitintervall kann vollständig oder nur teilweise mit dem zweiten Zeitintervall zusammenfallen beziehungsweise vollständig oder nur teilweise das zweite Zeitintervall überlappen, oder das erste Zeitintervall und das zweite Zeitintervall folgen jeweils komplett zeitlich aufeinander. Während eines dritten Zeitintervalls, insbesondere des Ladevorgangs, kann das Fahrzeug elektrische Energie aus dem Stromnetz beziehen, das heißt empfangen. Das dritte Zeitintervall kann vollständig oder nur teilweise mit dem zweiten Zeitintervall zusammenfallen beziehungsweise vollständig oder nur teilweise das zweite Zeitintervall überlappen, oder das dritte Zeitintervall und das zweite Zeitintervall folgen jeweils komplett zeitlich aufeinander.

Die von dem Stromnetz durch das Fahrzeug empfangene elektrische Energie kann vollständig genutzt werden, um den Energiespeicher zu laden. Alternativ kann die von dem Stromnetz durch das Fahrzeug empfangene elektrische Energie vollständig genutzt werden, um die Rechnereinheit zu Betreiben und deren Rechenleistung zur Verfügung zu stellen. Ferner ist es denkbar, dass ein gegenüber Null größerer erster Teil der von dem Stromnetz bereitgestellten und durch das Fahrzeug empfangenen elektrischen Energie genutzt wird, um den Energiespeicher mittels des ersten Teils zu laden. Außerdem wird beispielsweise ein gegenüber Null größerer zweiter Teil der von dem Stromnetz bereitgestellten und durch das Fahrzeug empfangenen elektrischen Energie genutzt, um die Rechnereinheit mittels des zweiten Teils zu betreiben und somit die Rechenleistung zur Verfügung zu stellen.

Eine weitere, von dem Fahrzeug empfangene, bezogene oder genutzte Leistung kann darin bestehen, dass das Fahrzeug - wie zuvor beschrieben - das Kühlmittel von der bezüglich des Fahrzeugs externen Kühleinrichtung empfängt und zum Kühlen des Energiespeichers und/oder der Rechnereinheit nutzt.

Für die jeweilige, von dem Fahrzeug erbrachte Leistung kann ein jeweiliger Erbringungswert berechnet werden, insbesondere mittels der Rechnereinheit des Fahrzeugs und/oder mittels einer bezüglich des Fahrzeugs externen elektronischen Recheneinrichtung wie beispielsweise mittels des Server, des Rechennetzwerks und/oder des Verbunds. Ferner ist es denkbar, für einige der erbrachten Leistungen und/oder für alle erbrachten Leistungen ein Gesamterbringungswert zu berechnen. Der Erbringungswert charakterisiert die jeweilige erbrachte Leistung, insbesondere deren Wert oder Wertigkeit. Dementsprechend charakterisiert der Gesamterbringungswert eine Summe oder eine Gesamtheit der erbrachten Leistungen, insbesondere einen Wert oder eine Wertigkeit der erbrachten Leistungen insgesamt.

Für die jeweilige, von dem Fahrzeug genutzte Leistung kann ein jeweiliger Nutzungswert berechnet werden, insbesondere mittels der Rechnereinheit des Fahrzeugs und/oder mittels einer bezüglich des Fahrzeugs externen elektronischen Recheneinrichtung wie beispielsweise mittels des Server, des Rechennetzwerks und/oder des Verbunds. Ferner ist es denkbar, für einige der genutzten Leistungen und/oder für alle genutzten Leistungen ein Gesamtnutzungswert zu berechnen. Der Nutzungswert charakterisiert die jeweilige genutzte Leistung, insbesondere deren Wert oder Wertigkeit. Dementsprechend charakterisiert der Gesamtnutzungswert eine Summe oder eine Gesamtheit der genutzten Leistungen, insbesondere einen Wert oder eine Wertigkeit der genutzten Leistungen insgesamt.

Der Erbringungswert beziehungsweise der Gesamterbringungswert charakterisiert beispielsweise einen Preis oder ein Entgelt, der beziehungsweise das dem Fahrzeug, insbesondere dessen Eigentümer, für die erbrachte Leistung oder für die erbrachten Leistungen zusteht. Der Nutzungswert beziehungsweise der Gesamtnutzungswert charakterisiert beispielsweise einen Preis oder ein Entgelt, der beziehungsweise das von dem Fahrzeug, insbesondere von dessen Eigentümer, für die genutzte Leistung oder für die genutzten Leistungen entrichten muss.

Es ist nun denkbar, den jeweiligen Nutzungswert beziehungsweise den Gesamtnutzungswert und den jeweiligen Erbringungswert beziehungsweise den Gesamterbringungswert jeweils einzeln abzurechnen. Alternativ oder zusätzlich werden das dem Fahrzeug beziehungsweise dessen Eigentümer zustehende Entgelt und das von dem Fahrzeug beziehungsweise von dessen Eigentümer zu entrichtende Entgelt einzeln abgerechnet. Bei dem einzelnen Abrechnen ist es beispielsweise vorgesehen, dass das Fahrzeug beziehungsweise der Eigentümer den jeweiligen Erbringungswert, den Gesamterbringungswert und/oder das dem Fahrzeug zustehende Entgelt erhält, insbesondere empfängt, und dass das Fahrzeug beziehungsweise der Eigentümer den jeweiligen Nutzungswert, den Gesamtnutzungswert und/oder das zu entrichtende Entgelt entrichtet, das heißt sendet. Das Senden und/oder Empfangen des jeweiligen Nutzungswert, des Gesamtnutzungswerts, des jeweiligen Erbringungswerts, des Gesamterbringungswerts, des dem Fahrzeug zustehenden Entgelts und/oder des zu entrichtenden Entgelts erfolgt beispielsweise mittels wenigstens eines Blockchain-Verfahren beziehungsweise über wenigstens ein Blockchain-Verfahren. Das Senden und/oder empfangen erfolgt beispielsweise per Daten- und/oder Kommunikationsverbindung, über welche beispielsweise das Fahrzeug, insbesondere die Rechnereinheit, mit dem Rechennetzwerk und/oder mit dem Verbund und/oder mit der Ladeinfrastruktur, insbesondere während des Ladevorgangs und/oder während des Bereitstellens der Rechenleistung, kommuniziert. Die Daten- und/oder Kommunikationsverbindung kann kabel- beziehungsweise leitungsgebunden oder aber leitungslos sein und/oder über das Internet erfolgen.

Ferner ist es denkbar, dass der jeweilige Erbringungswert und der jeweilige Nutzungswert beziehungsweise der Gesamterbringungswert und der Gesamtnutzungswert beziehungsweise das jeweilige, dem Fahrzeug zustehende Entgelt und das jeweilige, zu entrichtende Entgelt, insbesondere miteinander, verrechnet werden. Es wird sozusagen eine Bilanz der erbrachten und genutzten Leistungen erstellt beziehungsweise die erbrachten Leistungen, insbesondere deren Wertigkeiten, werden den genutzten Leistungen, insbesondere deren Wertigkeiten, gegenübergestellt.

Haben die erbrachten Leistungen die gleiche Wertigkeit wie die genutzten Leistungen, so erhält das Fahrzeug kein Entgelt, und das Fahrzeug muss auch kein Entgelt entrichte. Mit anderen Wort empfängt das Fahrzeug kein Entgelt beziehungsweise kein Erbringungswert und kein Gesamterbringungswert, und das Fahrzeug sendet kein Entgelt beziehungsweise kein Nutzungswert und kein Gesamtnutzungswert. Sind die von dem Fahrzeug genutzten beziehungsweise empfangenen Dienste höherwertig als die erbrachten Dienste, so entrichtet beziehungsweise sendet das Fahrzeug ein Entgelt beziehungsweise den jeweiligen Nutzungswert oder Gesamtnutzungswert. Das Fahrzeug empfängt oder erhält jedoch keinen Erbringungswert, Gesamterbringungswert oder Entgelt. Sind die von dem Fahrzeug erbrachten Dienste höherwertig als die genutzten Dienste, so erhält beziehungsweise empfängt das Fahrzeug ein Entgelt beziehungsweise den jeweiligen Erbringungswert oder Gesamterbringungswert. Wenn der Gesamtnutzungswert - trotz erbrachter Dienste oder Leistungen, etwa Rechenleistung - größer ist als der Gesamterbringungswert, so sendet oder entrichtet das Fahrzeug einen Nutzungswert, Gesamtnutzungswert oder Entgelt.

Sind beispielsweise das Empfangen von von dem Stromnetz bereitgestellter elektrischer Energie durch das Fahrzeug und das Bereitstellen der Rechenleistung gleichwertig, so erfolgt weder ein Empfangen noch ein Senden von Entgelt durch das Fahrzeug. Wird ein Entgelt an das und/oder von dem Fahrzeug gesendet und/oder von dem Fahrzeug empfangen, so erfolgt das Senden und/oder Empfangen vorzugsweise über ein Blockchain-Verfahren. Mit anderen Worten ist es vorzugsweise vorgesehen, dass ein beziehungsweise das Entgelt über wenigstens ein Blockchain-Verfahren gesendet und/oder empfangen wird. Zu der hierfür benötigten Rechenleistung kann das Fahrzeug selbst beitragen oder diese auch vollständig leisten. Selbstverständlich kann das Entgelt, der Erbringungswert, der Gesamterbringungswert, der Nutzungswert oder der Gesamtnutzungswert alternativ oder ergänzend zu dem Blockchain-Verfahren auch mittels konventioneller Finanztransaktionen übermittelt werden, wie etwa per Online-Überweisung oder Belastung einer Kreditkarte.

In einer besonders vorteilhaften Ausführung wird insbesondere der Gesamtnutzungswert dem insbesondere Gesamterbringungswert - oder umgekehrt - angepasst, so dass auf einen weiteren Ausgleich der erbrachten und empfangenen Leistungen verzichtet werden kann. Auf ein in der praktischen Umsetzung oft aufwändiges oder nicht mögliches beziehungsweise nicht vorgesehenes Senden oder Empfangen von Entgelten kann somit verzichtet werden, wodurch eine weitere Effizienzsteigerung möglich ist oder sogar eine Realisierung der vorgeschlagenen Lösung erst ermöglicht wird. So kann beispielsweise der Erbringungswert der Rechenleistung dem Nutzungswert der elektrischen Energie zum Laden des Engergiespeichers - oder umgekehrt - derart angepasst werden, dass sich diese bei deren Verrechnung ausgleichen und somit kein Senden oder Empfangen von Entgelten, also kein weiterer Bezahlvorgang oder ähnliches, notwendig ist.

Bei einer weiteren Ausführungsform der Erfindung hat es sich als besonders vorteilhaft gezeigt, wenn eine Kommunikation, insbesondere des Fahrzeugs, mit dem Server über eine Datenschnittstelle des Fahrzeugs erfolgt. Hierdurch kann eine sichere und schnelle Kommunikation zwischen dem Server und dem Fahrzeug sichergestellt werden, sodass beispielsweise der Hochleistungsrechner effektiv und effizient betrieben werden kann.

Eine weitere Ausführungsform der Erfindung zeichnet sich dadurch aus, dass das Entgelt in Abhängigkeit von einer Anzahl an mittels der Rechnereinheit durchgeführten und dem Rechnernetzwerk beziehungsweise dem Verbund bereitgestellten Rechenoperationen ermittelt wird. Je höher beispielsweise die Anzahl der Rechenoperationen ist, desto höher ist das Entgelt. Hierdurch kann der Eigentümer des Fahrzeugs besonders gut davon profitieren, dass er sein Fahrzeug für das Rechennetzwerk beziehungsweise für den Verbund zur Verfügung stellt. Auch der Verbund beziehungsweise das Rechennetzwerk profitiert davon, da eine besonders hohe Anzahl an Rechenoperationen durch das Fahrzeug durchgeführt werden kann.

Bei einer besonders vorteilhaften Ausführungsform der Erfindung wird das Entgelt über wenigstens ein Blockchain-Verfahren empfangen und/oder berechnet und/oder verrechnet. Zum Empfangen beziehungsweise Berechnen oder Verrechnen des Entgelts wird somit vorzugsweise auf wenigstens eine Blockchain zurückgegriffen, wodurch eine besonders sichere und genaue Abrechnung gewährleistet werden kann.

In weiterer Ausgestaltung der Erfindung wird die Rechenleistung der Rechnereinheit in Abhängigkeit von einem Ladezustand des Energiespeichers des Fahrzeugs dem Rechennetzwerk und/oder dem Verbund zur Verfügung gestellt. Der Ladezustand des Energiespeichers charakterisiert eine in dem Energiespeicher gespeicherte Menge an elektrischer Energie beziehungsweise elektrischem Strom. Durch Berücksichtigung des Ladezustands kann beispielsweise vermieden werden, dass ein übermäßig großer Teil der Rechenleistung dem Rechennetzwerk beziehungsweise dem Verbund zur Verfügung gestellt wird und/oder eine Zeitspanne, die der Energiespeicher geladen werden muss, um einen vorgebbaren oder vorgegebenen Ladezustand zu erreichen, kann besonders gering gehalten werden. Mittels dieser Ausführungsform kann beispielsweise sichergestellt werden, dass der Energiespeicher dann, wenn er zunächst einen besonders geringen Ladezustand aufweist, besonders schnell mit einer hohen Menge an elektrischer Energie geladen werden kann, sodass in kurzer Zeit ein hoher Wert des Ladezustands erreicht werden kann. Nach Erreichen oder Überschreiten des Werts kann beispielsweise die Rechenleistung, die von der Rechnereinheit des Fahrzeugs dem Rechennetzwerk beziehungsweise dem Verbund bereitgestellt wird, gesteigert werden, da bereits eine vorteilhaft große Menge an elektrischer Energie in dem Energiespeicher gespeichert wurde.

Als besonders vorteilhaft hat es sich gezeigt, wenn die dem Rechennetzwerk und/oder dem Verbund zur Verfügung gestellte Rechenleistung der Recheneinheit des Fahrzeugs mit zunehmender, in dem Energiespeicher des Fahrzeugs gespeicherter Menge an elektrischer Energie erhöht wird, das heißt zunimmt. Hierdurch kann eine Art Priorisierung durchgeführt werden. Zunächst wird beispielsweise ein Aufladen des Energiespeichers gegenüber dem Bereitstellen der Rechenleistung priorisiert, sodass zunächst in kurzer Zeit eine besonders große Menge an elektrischer Energie in den Energiespeicher eingespeichert werden kann, während beispielsweise dem Netzwerk beziehungsweise dem Verbund nur ein geringer Teil der Rechenleistung oder keine Rechenleistung zur Verfügung gestellt wird. Ist beispielsweise nach einer gewissen Zeit eine hinreichend große Menge an elektrischer Energie in dem Energiespeicher gespeichert, so kann das Bereitstellen der Rechenleistung gegenüber dem Aufladen des Energiespeichers vergrößert werden, sodass der Energiespeicher mit einer geringeren Rate geladen wird, jedoch ein besonders großer Teil beziehungsweise die gesamte Rechenleistung der Rechnereinheit dem Rechennetzwerk beziehungsweise dem Verbund zur Verfügung gestellt wird. Einerseits kann hierdurch eine Ladezeit zum Aufladen des Energiespeichers besonders gering gehalten werden. Andererseits kann gewährleistet werden, dass dem Rechennetzwerk beziehungsweise dem Verbund eine hinreichend große Rechenleistung der Recheneinheit zur Verfügung gestellt werden kann.

Eine weitere Ausführungsform zeichnet sich dadurch aus, dass die Rechenleistung der Rechnereinheit in Abhängigkeit von prädiktiven Daten zur Verfügung gestellt wird. Hierunter ist insbesondere Folgendes zu verstehen: Zu einem ersten Zeitpunkt beziehungsweise während einer ersten Zeitspanne wird beispielsweise, insbesondere mittels der Rechnereinheit des Fahrzeugs, ein zukünftiges Ereignis und/oder ein zukünftiger Zustand, insbesondere des Fahrzeugs, ermittelt, wobei das Ereignis beziehungsweise der Zustand zu einem zweiten Zeitpunkt beziehungsweise während einer zweiten Zeitspanne eintritt oder auftritt, und wobei der zweite Zeitpunkt beziehungsweise die zweite Zeitspanne zeitlich auf den ersten Zeitpunkt beziehungsweise auf die erste Zeitspanne folgt. Somit ist das Ereignis ein zukünftiges Ereignis beziehungsweise der Zustand ist ein zukünftiger Zustand. Insbesondere wird dabei die Rechenleistung zu einem dritten Zeitpunkt beziehungsweise während einer dritten Zeitspanne bereitgestellt, wobei der dritte Zeitpunkt beziehungsweise dritte Zeitspanne dem zweiten Zeitpunkt beziehungsweise der zweiten Zeitspanne zeitlich vorweggeht. Dies bedeutet, dass bei dem Bereitstellen der Rechenleistung das Ereignis beziehungsweise der Zustand berücksichtig wird, das beziehungsweise der beim Bereitstellen der Rechenleistung noch gar nicht aufgetreten ist beziehungsweise noch gar nicht auftritt, sondern erst mit einer gewissen Wahrscheinlichkeit in Zukunft auftreten wird. Hierdurch kann beispielsweise ein gewünschter Zustand des Fahrzeugs zu dem zweiten Zeitpunkt sichergestellt oder vermieden werden. Insbesondere kann beispielsweise sichergestellt werden, dass der Energiespeicher zu dem zweiten Zeitpunkt einen gewünschten Ladezustand aufweist und/oder unerwünschte Temperaturen des Fahrzeugs können zu dem zweiten Zeitpunkt vermieden werden. Insbesondere kann durch Berücksichtigung der prädiktiven Daten gesichert werden, dass das Fahrzeug zu dem zweiten Zeitpunkt fahrbereit ist, insbesondere im Hinblick auf eine autonome Fahrt und auf eine hinreichend große Menge an in dem Energiespeicher gespeicherte elektrische Energie, um dann beispielsweise ab dem zweiten Zeitpunkt eine vorgebbare oder vorgegebene Fahrstrecke elektrisch und beispielsweise autonom fahren zu können.

Dabei hat es sich als besonders vorteilhaft gezeigt, wenn die prädiktiven Daten einen erwarteten, zukünftigen Ladezustand des Energiespeichers, das heißt einen erwarteten, zukünftigen Wert des Ladezustands umfassen. Hierdurch kann beispielsweise sichergestellt werden, dass beispielsweise zu dem zweiten Zeitpunkt die in dem Energiespeicher gespeicherte Menge an elektrischer Energie ausreicht, um eine vorgebbare oder vorgegebene Fahrstrecke elektrisch zurücklegen zu können. Alternativ oder zusätzlich umfassen die prädiktiven Daten eine geplante Fahrroute des Fahrzeugs, welches beispielsweise, insbesondere nach dem Ladevorgang, entlang der Fahrroute mit einer gewissen Wahrscheinlichkeit gefahren wird. Durch Berücksichtigung der Fahrroute kann sichergestellt werden, dass das Fahrzeug nach dem Laden und nach dem Bereitstellen der Rechenleistung die Fahrroute autonom und beispielsweise zumindest teilweise oder vollständig elektrisch zurücklegen kann.

Die auch als Fahrtroute bezeichnete Fahrroute ist beispielsweise eine mittels eines Navigationssystems, insbesondere des Fahrzeugs, berechnete oder erstelle Route oder Strecke, welche von einem Startort zu einem Zielort verläuft. Das Fahrzeug kann entlang der Route gefahren werden und/oder autonom fahren, um von dem Startort zu dem Zielort zu gelangen beziehungsweise zu fahren. Der Startort ist beispielsweise ein aktueller Ort des Fahrzeugs auf der Erde und/oder ein von einem Nutzer des Fahrzeugs vorgegebener Ort, welcher beispielsweise derart vorgegeben wurde, wird oder ist, dass der Nutzer eine Eingabe in das Navigationssystem tätigt oder getätigt hat. Entlang der Fahrroute kann wenigstens eine oder mehrere Ladeeinrichtungen, insbesondere Ladesäulen, liegen, mittels welcher der Energiespeicher geladen und/oder von welcher das Fahrzeug elektrische Energie empfangen und/oder über welche das Fahrzeug elektrische Energie aus dem Energiespeicher in das Stromnetz einspeisen kann. Insbesondere kann die Fahrroute so geplant sein oder werden, dass entlang der Fahrroute wenigstens eine oder mehrere Ladeeinrichtung liegt beziehungsweise liegen. Die jeweilige Ladeeinrichtung kann ein Zwischenziel sein, das entlang der Fahrroute liegt. Die Fahrroute ist beziehungsweise wird mittels des Navigationssystem beispielsweise satellitenbasiert, insbesondere per GPS (GPS - global positioning system - globales Positionierungssystem) ermittelt, insbesondere berechnet.

Alternativ oder zusätzlich umfassen die prädiktiven Daten eine erwartete, zukünftige Temperatur, insbesondere des Fahrzeugs und dabei beispielsweise der Rechnereinheit und/oder der elektrischen Maschine und/oder des Energiespeichers. Hierdurch kann beispielsweise vermieden werden, dass das Fahrzeug, insbesondere die Rechnereinheit und/oder der Energiespeicher und/oder die elektrische Maschine, bei einem sich an den Ladevorgang und an das Bereitstellen der Rechenleistung anschließenden Fahrtbeginn eine übermäßig hohe Temperatur aufweist, die eine gewünschte Leistungsfähigkeit und/oder eine gewünschte elektrische Reichweite des Fahrzeugs negativ beeinträchtigen könnte.

Alternativ oder zusätzlich können die prädiktiven Daten eine erwartete, zukünftige Umgebung des Fahrzeugs charakterisieren. Wird beispielsweise anhand der prädiktiven Daten ermittelt, dass das Fahrzeug nach dem Ladevorgang und nach dem Bereitstellen der Rechenleistung einer solchen Umgebung ausgesetzt wird, in welcher besonders hohe Temperaturen herrschen, so kann das Bereitstellen der Rechenleistung beispielsweise derart durchgeführt werden, dass die Rechnereinheit und/oder der Energiespeicher nach dem Bereitstellen der Rechenleistung eine hinreichend geringe Temperatur aufweist, sodass es dann, wenn das Fahrzeug der genannten Umgebung ausgesetzt ist, nicht zu einer übermäßig hohen Temperatur des Fahrzeugs, insbesondere der Rechnereinheit und/oder des Energiespeichers, kommt. Die prädiktiven Daten, insbesondere die zukünftige Umgebung, umfassen beispielsweise ein beziehungsweise den zuvor genannten Zielort und/oder eine Ankunftszeit und/oder ein beziehungsweise das zuvor genannte Zwischenziel einer mittels des Navigationssystems ermittelten, insbesondere berechneten, Fahrroute, die von dem Fahrzeug, insbesondere autonom, in Zukunft mit einer gewissen Wahrscheinlichkeit befahren wird. Alternativ oder zusätzlich können die prädiktiven Daten auf einen elektronischen Kalender und darin gespeicherte Termine oder dergleichen zurückgreifen, um beispielsweise zu ermitteln, an welchem Ort auf der Erde das Fahrzeug in Zukunft beziehungsweise in einer gewissen Zeit oder zu einem gewissen Zeitpunkt sein wird. So kann beispielsweise ermittelt werden, dass noch eine gewisse Zeitspanne für den Ladevorgangs beziehungsweise für das Bereitstellen der Rechenleistung zur Verfügung steht, bis der Ladevorgang beendet und eine Fahrt des Fahrzeugs gestartet wird. Mit anderen Worten kann ermittelt werden, wie lange das Fahrzeug noch steht und der Ladevorgang durchgeführt wird. Zudem kann hierdurch ein Zeitpunkt und/oder eine Zeitdauer abgeschätzt werden, ab welchem bzw. für welche das Fahrzeug Leistungen oder Dienste, wie etwa die Rechenleistung, erbringen, bereitstellen oder leisten kann. Auf diese Weise können die Leistungen und Dienste effizienter eingesetzt werden, da sie besser aufeinander abstimmbar sind. Dies ist insbesondere vorteilhaft, wenn mehrere Fahrzeuge, etwa innerhalb einer Fahrzeugflotte, beteiligt sind.

Alternativ oder zusätzlich umfassen die prädiktiven Daten einen Zeitpunkt eines erwarteten, zukünftigen Beginns einer Fahrt des Fahrzeugs. Hierdurch kann sichergestellt werden, dass in dem Energiespeicher zu dem Zeitpunkt des Beginns der Fahrt eine hinreichend hohe Menge an elektrischer Energie gespeichert ist, um beispielsweise eine erwünschte Strecke elektrisch zurücklegen zu können.

Alternativ oder zusätzlich können die prädiktiven Daten einen erwarteten, zukünftigen Zustand des Rechennetzwerks und/oder des Verbunds und/oder eines oder des bezüglich des Fahrzeugs externen Stromnetzes, mit welchem das Fahrzeug während des Ladevorgangs beispielsweise zumindest elektrisch verbunden ist, umfassen. Hierdurch kann das Fahrzeug, insbesondere die Rechnereinheit, bedarfsgerecht betrieben werden, um einen gewünschten Zustand des Fahrzeugs zu einem zukünftigen Zeitpunkt einstellen oder vermeiden zu können. Hintergrund dieser Ausführungsform ist insbesondere, dass es einerseits gewünscht ist, dem Rechennetzwerk beziehungsweise dem Verbund eine besonders hohe Rechenleistung der Rechnereinheit des Fahrzeugs bereitstellen zu können. Andererseits sollen eine Leistungsfähigkeit und eine Fahrbarkeit des Fahrzeugs nach dem Ladevorgang und nach dem Bereitstellen der Rechenleistung für den Nutzer des Fahrzeugs nicht beeinträchtigt sein, sodass der Nutzer sein Fahrzeug trotz des Bereitstellens der Rechenleistung vorteilhaft nutzen und betreiben kann.

Schließlich hat es sich als besonders vorteilhaft gezeigt, wenn die Rechnereinheit über wenigstens eine kabellose Datenverbindung und/oder über wenigstens eine physische Datenleitung mit dem Rechennetzwerk und/oder mit dem Verbund gekoppelt ist. Die zuvor beschriebene Kommunikation über die Datenschnittstelle erfolgt somit kabellos oder aber über die physische Datenleitung. Die kabellose Datenverbindung erfolgt beispielsweise über Funk. Ist die Datenleitung vorgesehen, so ist es vorzugsweise vorgesehen, dass die Datenleitung mit der Stromleitung und/oder mit der Kühlleitung zu einer Gesamtleitung zusammengefasst ist. Dadurch geht beispielsweise das Verbinden des Fahrzeugs mit dem Rechennetzwerk beziehungsweise mit der Datenleitung gleichzeitig einher mit dem Verbinden des Fahrzeugs mit der Kühlleitung und/oder mit der Stromleitung, sodass das Verfahren auf besonders einfache und komfortable Weise realisiert werden kann. Die zuvor genannte, auch als Stromkabel bezeichnet Stromleitung, über welche das Fahrzeug elektrische Energie empfängt und/oder in das Stromnetz einspeist, kann gleichzeitig eine Datenleitung sein oder als Datenleitung genutzt werden, über welche die Rechnereinheit mit dem Rechennetzwerk und/oder mit dem Verbund und/oder mit der Ladeinfrastruktur kommuniziert, das heißt beispielsweise Daten austauscht.

Außerdem ist folgende Funktion denkbar: Unter der Annahme, dass auch als Rechner-Ressourcen bezeichnete Ressourcen der Rechnereinheit und somit des Fahrzeugs größer sind als zum autonomen Fahren permanent notwendig sind, kann das Fahrzeug automatisch in Abhängigkeit von einer Fahrsituation und/oder in Abhängigkeit von dem Ladezustand und/oder in Abhängigkeit von der auch als Kommunikationsverbindung bezeichneten Datenverbindung und/oder in Abhängigkeit von einem Preis für in das Stromnetz eingespeiste elektrische Energie und/oder in Abhängigkeit von einem Preis für aus dem Stromnetz entnommene elektrische Energie einen Betriebsmodus des Fahrzeugs, insbesondere der Rechnereinheit, permanent variieren, also insbesondere während der Fahrt einen Teil der Rechenleistung der Recheneinheit bereitstellen oder sogar aktiv eine Parkposition einnehmen und nur am Stromnetz partizipieren, wenn der Preis dies hinreichend gewinnbringend macht. Während einer autonomen Fahrt des Fahrzeugs erfolgt beispielsweise ein Ausgleich beziehungsweise ein Balancieren zwischen dem autonomen Fahren und dem Bereitstellen der Rechenleistung der Rechnereinheit.

Während des Ladevorgangs kann das Grid-Computing aktiviert sein, und in Abhängigkeit von aktuellen Strompreisen empfängt der auch als Stromspeicher bezeichnete Energiespeicher elektrische Energie aus dem elektrischen Stromnetz oder speist elektrische Energie in das Stromnetz ein. Etwaige Fahraufträge, die von dem Fahrzeug zu erfüllen sind, werden dann beispielsweise zurückgestellt.

Zur Erfindung gehört auch ein autonom bewegbares beziehungsweise ein autonom fahrbares Fahrzeug, welches somit dazu ausgebildet ist, eine autonome Fahrt durchzuführen beziehungsweise eine Fahrt autonom durchzuführen. Das Fahrzeug, welches vorzugsweise als Kraftwagen, insbesondere als Personenkraftwagen oder Lastkraftwagen, ausgebildet ist, ist zum Durchführen eines erfindungsgemäßen Verfahrens ausgebildet. Vorteile und vorteilhafte Ausgestaltungen des erfindungsgemäßen Verfahrens sind als Vorteile und vorteilhafte Ausgestaltungen des erfindungsgemäßen Fahrzeugs anzusehen und umgekehrt.

Das Fahrzeug kann auch dazu ausgebildet sein, die Rechenleistung der Rechnereinheit nicht oder nicht nur während eines Ladevorgangs zum Laden des Energiespeichers dem oder einem fahrzeugexternen Rechennetzwerk beziehungsweise dem oder einem fahrzeugexternen Verbund bereitzustellen, sondern das Fahrzeug kann auch dazu ausgebildet sein, die Rechenleistung der Rechnereinheit dem beziehungsweise zumindest einem fahrzeugexternen Rechennetzwerk und/oder dem beziehungsweise einem Verbund von fahrzeugexternen Recheneinheiten zur Verfügung zu stellen während ein Laden des Energiespeichers des Fahrzeugs unterbleibt. Insbesondere kann das Fahrzeug zumindest einen Teil, insbesondere zumindest einen überwiegenden Teil, der Rechenleistung oder die gesamte Rechenleistung im Stillstand und/oder während einer Fahrt, insbesondere während einer autonomen Fahrt, zur Verfügung stellen, während ein Laden des Energiespeichers unterbleibt, das heißt ohne dass der Energiespeicher geladen wird.

Unter dem Merkmal, dass das Fahrzeug autonom fahren kann, ist zu verstehen, dass das Fahrzeug gemäß der auch als Level bezeichneten SAE-Autonomiestufe 3 oder höher, das heißt 3, 4 oder 5 autonom fahren kann (SAE - Society of Automotive Engineers). Das Level 3 beziehungsweise die SAE-Autonomiestufe 3 bedeutet eine bedingte Automation und dabei die Fahrmodus-spezifische Ausführung aller Aspekte der dynamischen Fahraufgabe durch ein automatisiertes Fahrsystem mit der Erwartung, dass der menschliche Fahrer auf Anfrage des Systems angemessen reagieren wird. Das Level 4 beziehungsweise die SAE-Autonomiestufe 4 bedeutet eine hohe Automation und dabei die Fahrmodus-spezifische Ausführung aller Aspekte der dynamischen Fahraufgabe durch ein automatisiertes Fahrsystem, selbst wenn der menschliche Fahrer auf Anfrage des Systems nicht angemessen reagiert. Das Level 5 beziehungsweise die SAE-Autonomiestufe 5 bedeutet eine volle Automation und dabei die durchgängige Ausführung aller Aspekte der dynamischen Fahraufgabe durch ein automatisiertes Fahrsystem unter allen Fahr- und Umweltbedingungen, die von einem menschlichen Fahrer bewältigt werden können.

Ausführungsbeispiele der Erfindung werden im Folgenden anhand einer Zeichnung näher
erläutert.

Dabei zeigt:
- Fig. 1: schematisch ein mit einer Ladeinfrastruktur gekoppeltes Fahrzeug zum Laden eines elektrischen Energiespeichers des Fahrzeuges; und
- Fig. 2: eine schematische Darstellung eines Rechennetzwerks, welchem eine Rechenleistung einer Rechnereinheit des Fahrzeugs während eines Ladevorgangs bereitgestellt wird.

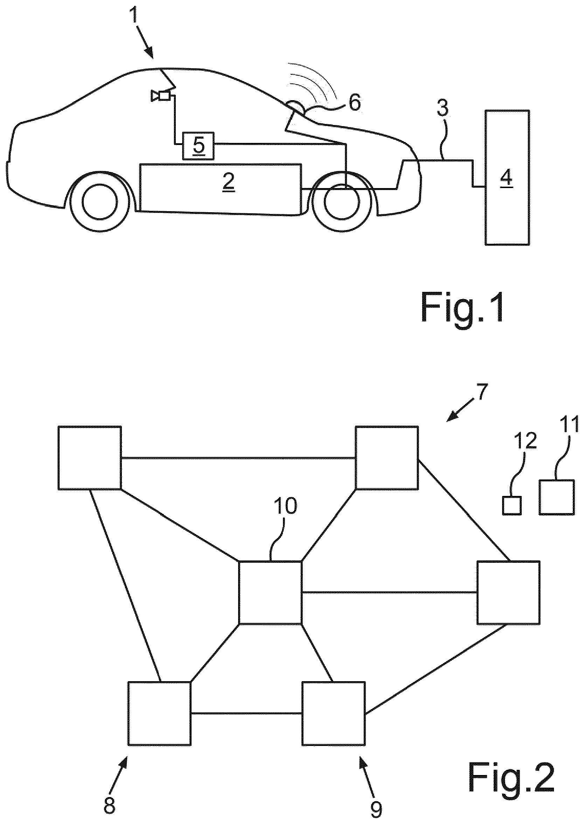

In Fig. 1 ist ein Fahrzeug 1 dargestellt, dessen elektrischer Energiespeicher 2 zum Laden mittels einer Daten- und Energiekopplung 3 mit einer Ladeinfrastruktur 4 verbunden ist.

Bei dem Fahrzeug 1 handelt es sich um ein Elektrofahrzeug oder ein Hybridfahrzeug mit einer nicht näher gezeigten elektrischen Antriebseinheit, wobei das Fahrzeug 1 über ein Assistenzsystem verfügt, mittels dessen das Fahrzeug 1 im autonomen Fahrbetrieb bewegbar ist.

Im autonomen Fahrbetrieb übergibt ein Fahrzeugnutzer des Fahrzeuges 1 seine Fahraufgabe vollumfänglich an das Fahrzeug 1, wobei auch denkbar ist, dass sich während des autonomen Fahrbetriebes kein Fahrzeugnutzer im Fahrzeug 1 befindet. Autonomes Fahren, welches auch unter hochautomatisiertem Fahren bekannt ist, wird zukünftig durch im Folgenden aufgezählte technische Elemente gekennzeichnet sein.

Zur Durchführung des autonomen Fahrbetriebes sind der Einsatz einer hochleistungsfähigen Rechnereinheit 5 und der Einsatz einer vergleichsweise schnellen Netzwerktechnik erforderlich.

Insbesondere, wenn es sich bei dem Fahrzeug 1 um ein Elektrofahrzeug handelt, ist es erforderlich, den elektrischen Energiespeicher 2 zyklisch aufzuladen.

Zudem handelt es sich bei dem Fahrzeug 1 um ein kommerziell genutztes Fahrzeug 1, welches Bestandteil einer Fahrzeugflotte sein kann, die von einem Flottenmanagementsystem zentral verwaltet wird.

Ist das Fahrzeug 1 zum Laden des elektrischen Energiespeichers 2 mit der Ladeinfrastruktur 4 verbunden, wird die Rechnereinheit 5 des Fahrzeuges 1 nicht genutzt. Mit anderen Worten wird in den Ladezeiten eine Rechnerarchitektur des Fahrzeuges 1
nicht genutzt.

Um die Rechnereinheit 5 des Fahrzeuges 1 während der Ladezeit zu nutzen und dadurch wirtschaftlichen Nutzen zu generieren, ist vorgesehen eine Rechenleistung der Rechnereinheit 5 zumindest einem fahrzeugexternen Rechennetzwerk und/oder einem Verbund von fahrzeugexternen Recheneinheiten zur Verfügung zu stellen.

Dabei bilden die Rechnereinheiten 5 einer Anzahl solcher Fahrzeuge 1, deren elektrische Energiespeicher 2 gleichzeitig geladen werden, einen virtuellen Hochleistungsrechner, welcher eine virtuelle Hochleistungsplattform mit entgeltlich zu veräußernder Rechenzeit darstellt. Dieser virtuelle Hochleistungsrechner wird über einen Server zentral verwaltet.

Insbesondere wird die Rechnereinheit 5 für ein sogenanntes Bitcoin-Mining zur Verfügung gestellt. Unter Bitcoin-Mining ist ein Prozess zu verstehen, bei welchem Rechenleistung zur Transaktionsverarbeitung, Absicherung und Synchronisierung aller Nutzer in einem Computernetzwerk zur Verfügung gestellt wird. Dabei bildet das Mining eine Art dezentrales Bitcoin-Rechenzentrum mit Minern, also Nutzern. Beim Bitcoin-Mining erhält ein Nutzer eine Belohnung für einen nützlichen Dienst. Eine Auszahlung jeweiliger Bitcoin-Anteile richtet sich dabei nach einer zur Verfügung gestellten Rechnerkapazität.

Jedes Fahrzeug 1 kann durch das zur Verfügung stellen der Rechnereinheit 5 Bitcoins "schürfen".

Ein Zugriff auf die Rechnereinheit 5 des Fahrzeuges 1 erfolgt dabei über eine drahtlose Datenschnittstelle 6, insbesondere über eine sogenannte Luftschnittstelle, wobei diese Datenschnittstelle 6 eine Kommunikationseinheit bildet. Dabei erfolgt über diese Datenschnittstelle 6 insbesondere eine Kommunikation mit dem Server. Alternativ oder zusätzlich kann die Datenschnittstelle eine draht- oder kabel- beziehungsweise leitungsgebundene Schnittstelle sein, sodass die Rechnereinheit 5 kabellos oder kabelgebunden mit dem Rechennetzwerk kommuniziert.

Unter dem Merkmal, dass das Fahrzeug autonom fahren kann, ist zu verstehen, dass das Fahrzeug gemäß der auch als Level bezeichneten SAE-Autonomiestufe 3 oder höher, das heißt 3, 4 oder 5 autonom fahren kann (SAE - Society of Automotive Engineers). Das Level 3 beziehungsweise die SAE-Autonomiestufe 3 bedeutet eine bedingte Automation und dabei die Fahrmodus-spezifische Ausführung aller Aspekte der dynamischen Fahraufgabe durch ein automatisiertes Fahrsystem mit der Erwartung, dass der menschliche Fahrer auf Anfrage des Systems angemessen reagieren wird. Das Level 4 beziehungsweise die SAE-Autonomiestufe 4 bedeutet eine hohe Automation und dabei die Fahrmodus-spezifische Ausführung aller Aspekte der dynamischen Fahraufgabe durch ein automatisiertes Fahrsystem, selbst wenn der menschliche Fahrer auf Anfrage des Systems nicht angemessen reagiert. Das Level 5 beziehungsweise die SAE-Autonomiestufe 5 bedeutet eine volle Automation und dabei die durchgängige Ausführung aller Aspekte der dynamischen Fahraufgabe durch ein automatisiertes Fahrsystem unter allen Fahr- und Umweltbedingungen, die von einem menschlichen Fahrer bewältigt werden können

Fig. 2 zeigt in einer schematischen Darstellung das zuvor genannte, in Fig. 2 mit 7 bezeichnete und bezüglich des Fahrzeugs 1 externe und somit fahrzeugexterne Rechennetzwerk, wobei die vorigen und folgenden Ausführungen zum Rechennetzwerk 7 ohne weiteres auf den zuvor genannten Verbund übertragen werden können und umgekehrt. Die zuvor genannten, fahrzeugexternen Recheneinheiten sind ebenfalls in schematischer Fig. 2 dargestellt und dort mit 8 bezeichnet, wobei bei dem in Fig. 2 gezeigten Ausführungsbeispiel die Recheneinheiten 8 Bestandteile des Rechennetzwerks 7 sind beziehungsweise das Rechennetzwerk 7 bilden. Die Recheneinheiten 8 können dabei die zuvor genannten fahrzeugexternen Recheneinheiten des Verbunds sein. Insbesondere ist es denkbar, dass die jeweilige Recheneinheit 8 eine jeweilige Rechnereinheit eines jeweiligen weiteren, bezüglich des Fahrzeugs 1 externen und zusätzlichen zu dem Fahrzeug 1 vorgesehen sowie autonom bewegbaren beziehungsweise fahrbaren Fahrzeugs ist, sodass die weiteren Rechnereinheiten der weiteren autonom bewegbaren Fahrzeuge das Rechennetzwerk 7 bilden, welchem die Rechenleistung der Rechnereinheit 5 des Fahrzeugs 1 zur Verfügung gestellt wird. Der zuvor genannte virtuelle Hochleistungsrechner ist in Fig. 2 ebenfalls schematisch dargestellt und mit 9 bezeichnet, wobei bei dem in Fig. 2 gezeigten Ausführungsbeispiel der Hochleistungsrechner 9 durch die Recheneinheiten 8 und die Rechnereinheit 5 gebildet ist. Außerdem ist der zentrale Server in Fig. 2 mit 10 bezeichnet, wobei der zentrale Server 10 eine bezüglich der weiteren Fahrzeuge und bezüglich des Fahrzeugs 1 externe, zusätzlich dazu vorgesehene elektronische Rechnereinheit oder Recheneinrichtung ist.

Die jeweilige Recheneinheit 8 und/oder der Server 10 kann mit der Rechnereinheit 5 über die Datenstelle 6 und somit beispielsweise kabellos kommunizieren. Alternativ oder zusätzlich ist denkbar, dass die jeweilige Recheneinheiten 8 und/oder der Server 10 kabel- oder leitungsgebunden und dabei beispielsweise über die Daten- und Energiekopplung 3 kommunizieren und somit beispielsweise Daten austauschen kann.

Das Fahrzeug 1 kann insbesondere für die folgenden drei Bereiche vorteilhaft genutzt werden: Zum einen kann mittels des Fahrzeugs 1 ein autonomer Fahrbetrieb gewährleistet werden, da das Fahrzeug 1 mittels der Rechnereinheit 5 autonom bewegt beziehungsweise gefahren werden kann. Des Weiteren kann das Fahrzeug 1 zur Realisierung von Grid-Computing genutzt werden. Im Rahmen des Grid-Computings wird dem Rechennetzwerk 7 beziehungsweise dem Verbund zumindest ein Teil der Rechenleistung der Rechnereinheit 5 bereitgestellt, um dadurch beispielsweise das Rechennetzwerk 7 um die Rechnereinheit 5, insbesondere deren Rechenleistung, zu ergänzen und somit zu verstärken. Außerdem kann mittels des Fahrzeugs 1 ein bidirektionales Laden realisiert werden. Dem Rechennetzwerk 7 wird die Rechenleistung der Rechnereinheit 5 während eines Ladevorgangs des elektrischen Energiespeichers 2 zur Verfügung gestellt.

Unter dem bidirektionalen Ladens ist zu verstehen, dass der Energiespeicher 2 beziehungsweise das Fahrzeug 1 elektrische Energie von einem bezüglich des Fahrzeugs 1 externen Stromnetz empfangen kann, wobei das Stromnetz die elektrische Energie über die Ladeinfrastruktur 4 bereitstellt beziehungsweise die Ladeinfrastruktur 4 umfasst. Die von dem Stromnetz bereitgestellte elektrische Energie, welche von dem Fahrzeug 1 beziehungsweise von dem Energiespeicher 2 empfangen wird, wird in dem Energiespeicher 2 gespeichert. Hierdurch wird eine Menge an in dem Energiespeicher 2 gespeicherter elektrischer Energie erhöht. Außerdem kann das Fahrzeug 1, insbesondere der Energiespeicher 2, in dem Energiespeicher 2 gespeicherte elektrische Energie bereitstellen und, insbesondere über die Ladeinfrastruktur 4, in das Stromnetz einspeisen. Dies bedeutet, dass das Fahrzeug 1 zumindest ein Teil der in dem Energiespeicher 2 gespeicherten elektrischen Energie dem Stromnetz bereitstellen kann. Der Energiespeicher 2 empfängt die von dem Stromnetz bereitgestellte elektrische Energie beispielsweise über die Daten- und Energiekopplung 3. Außerdem kann die im Energiespeicher 2 gespeicherte elektrische Energie über die Daten- und Energiekopplung 3 in das Stromnetz eingespeist werden. Dieses Einspeisen von elektrischer Energie wird auch als vehicle-to-grid bezeichnet, in dessen Rahmen der Energiespeicher 2 als Stromspeicher für das Stromnetz genutzt wird.

Insgesamt ist erkennbar, dass das Fahrzeug 1 als eine insbesondere autonom fahrende Transporteinheit zum Transportieren von Transportgütern und/oder Personen genutzt werden kann. Die Rechnereinheit 5 kann für das autonome Fahren sowie für das zuvor genannte Grid-Computing verwendet werden. Beispielsweise über die Datenschnittstelle 6 kann die Rechnereinheit 5 an ein bezüglich des Fahrzeugs 1 externes Datennetz und somit beispielsweise an das Rechennetzwerk 7 angeschlossen werden, insbesondere über das Internet und/oder über ein virtuelles privates Netzwerk (VPN - virtual private network).

Der Energiespeicher 2 ist beispielsweise als eine Hochvolt-Komponente und dabei als eine Hochvolt-Batterie (HV-Batterie) ausgebildet, um beispielsweise besonders große elektrische Leistungen zum elektrischen Antreiben des Fahrzeugs 1 realisieren zu können. Des Weiteren umfasst das Fahrzeug 1 beispielsweise eine in den Figuren nicht dargestellte Ladeeinrichtung, über welche der Energiespeicher 2 die von dem Stromnetz bereitgestellte Energie empfangen und in sich speichern kann. Ferner kann beispielsweise der Energiespeicher 2 die in sich gespeicherte elektrische Energie über die Ladeeinrichtung bereitstellen und hierdurch in das Stromnetz einspeisen.

Durch das bidirektionale Laden lässt sich ein vorteilhaftes Balancing, das heißt ein besonders vorteilhafter Ausgleich realisieren. Je nach Zustand des Energiespeichers 2 und/oder je nach Zustand des Stromnetzes kann Energiespeicher 2 elektrische Energie aus dem Stromnetz entnehmen oder in das Stromnetz einspeisen, sodass beispielsweise die mehreren autonom bewegbaren Fahrzeuge, insbesondere deren Energiespeicher, als Puffer für das Stromnetz fungieren können.

Außerdem ist vorzugsweise wenigstens ein Kühlanschluss vorgesehen. Mit anderen Worten weist das Fahrzeug 1 vorzugsweise wenigstens einen Kühlanschluss auf, über welchen das Fahrzeug 1 mit einer bezüglich des Fahrzeugs 1 externen und in Fig. 2 besonders schematisch dargestellten Kühleinrichtung 11, zumindest physisch, verbunden werden kann. Die externe Kühleinrichtung 11 kann ein beispielsweise als Gas, insbesondere als Luft, oder als Flüssigkeit ausgebildetes Kühlmedium bereitstellen, wobei das Fahrzeug 1 über den in Fig. 2 besonders schematisch dargestellten Kühlanschluss 12 des Fahrzeugs 1 das von der Kühleinrichtung 11 bereitgestellte Kühlmedium empfangen kann. Mittels des empfangenen Kühlmediums kann wenigstens eine oder mehrere Komponenten des Fahrzeugs 1 gekühlt werden. Insbesondere kann mittels des Kühlmediums der Energiespeicher 2 und/oder die Rechnereinheit 5 gekühlt werden.

Im Folgenden werden Aspekte einer Automatisierung beschrieben, insbesondere im Hinblick auf eine Aktivierung, insbesondere auf eine automatische Aktivierung, des zuvor beschriebenen Grid-Computings: Der Vorgang, dass die Rechenleistung der Rechnereinheit 5 dem Rechennetzwerk 7 zur Verfügung gestellt wird, wird auch als Bereitstellen der Rechenleistung der Rechnereinheit 5 bezeichnet. Das Bereitstellen der Rechenleistung der Rechnereinheit 5 wird beispielsweise mit zunehmendem beziehungsweise größer werdendem Ladezustand des Energiespeichers 2 sukzessive aktiviert. Mit anderen Worten ist es vorzugsweise vorgesehen, dass die dem Rechennetzwerk 7 zu Verfügung gestellte Rechenleistung der Rechnereinheit 5 des Fahrzeugs mit zunehmender, in dem Energiespeicher 2 des Fahrzeugs gespeicherter Menge an elektrischer Energie erhöht wird, das heißt zunimmt.

Alternativ oder zusätzlich ist eine gestufte Freigabe vorgesehen. Mit zunehmender Menge an in wenigstens einem der Energiespeicher der autonom bewegbaren Fahrzeuge gespeicherter elektrischer Energie werden mehr und mehr der Rechnereinheiten der Fahrzeuge für das Grid-Computing freigegeben. Ferner ist es denkbar, dass ein Start des Ladevorgangs ein Auslöser ist, um die Rechenleistung der Rechnereinheit 5 dem Rechennetzwerk 7 zur Verfügung zu stellen. Gegebenenfalls ist eine Übergangsdauer vorgesehen, sodass zwischen einem Beginn des Ladevorgangs und einem Beginn des Bereitstellens der Rechenleistung der Rechnereinheit 5 eine Zeitspanne liegt, während welcher beispielsweise der Ladevorgang durchgeführt wird jedoch ein Bereitstellen der Rechenleistung der Rechnereinheit 5 unterbleibt. Das sukzessive Bereitstellen der Rechenleistung erfolgt beispielsweise in Abhängigkeit von wenigstens einer Funktionsvorgabe. Mit anderen Worten wird die Rechenleistung der Rechnereinheit 5 während der Übergangszeit nicht dem Rechennetzwerk 7 zur Verfügung gestellt.

Alternativ oder zusätzlich zu einer automatischen Aktivierung des Bereitstellens der Rechenleistung der Rechnereinheit 5 kann eine automatische Deaktivierung des Bereitstellens der Rechenleistung der Rechnereinheit 5 vorgesehen sein. Beispielsweise in Abhängigkeit von laufenden Berechnungen und/oder anstehenden und beispielsweise in Zukunft erfolgenden Fahraufgaben insbesondere im Hinblick auf eine autonome Fahrt wird beispielsweise das Bereitstellen der Rechenleistung der Rechnereinheit 5 automatisch beendet. Bevorzugt wird das Bereitstellen erst nach Lösen oder Beenden einer zurzeit laufenden Rechenaufgabe und/oder einer Berechnung und/oder einer Berechnung oder Bearbeitung eines Aufgabenpakets automatisch beendet.

Alternativ oder zusätzlich ist denkbar, dass das Bereitstellen der Rechenleistung der Rechnereinheit 5 in Abhängigkeit von dem Ladezustand des Energiespeichers 2 beendet wird. Überschreitet beispielsweise die in dem Energiespeicher 2 gespeicherte Menge an elektrischer Energie einen vorgebbaren Schwellenwert, so wird das Bereitstellen der Rechenleistung der Rechnereinheit 5, insbesondere automatisch, aktiviert. Unterschreitet beispielsweise die Menge der in dem Energiespeicher 2 gespeicherten elektrischen Energie den Schwellenwert, so wird das Bereitstellen der Rechenleistung der Rechnereinheit 5, insbesondere automatisch, beendet. Der Schwellenwert beträgt beispielsweise 10% der maximalen, in dem Energiespeicher 2 speicherbaren Energiemenge. Hierdurch kann ein unerwünscht geringer Ladezustand des Energiespeichers 2 vermieden werden. Ferner ist es denkbar, dass die dem Rechennetzwerk 7 zur Verfügung gestellte Rechenleistung der Rechnereinheit 5 mit abnehmendem Ladezustand, das heißt mit abnehmender Menge an in dem Energiespeicher 2 gespeicherter elektrischer Energie reduziert wird, das heißt abnimmt.

Außerdem ist folgende Funktion denkbar: Unter der Annahme, dass auch als Rechner-Ressourcen bezeichnete Ressourcen der Rechnereinheit 5 und somit des Fahrzeugs 1 größer sind als zum autonomen Fahren permanent notwendig sind, kann das Fahrzeug 1 automatisch in Abhängigkeit von einer Fahrsituation und/oder in Abhängigkeit von dem Ladezustand und/oder in Abhängigkeit von der auch als Kommunikationsverbindung bezeichneten Datenverbindung und/oder in Abhängigkeit von einem Preis für in das Stromnetz eingespeiste elektrische Energie und/oder in Abhängigkeit von einem Preis für aus dem Stromnetz entnommene elektrische Energie ein Betriebsmodus des Fahrzeugs 1, insbesondere der Rechnereinheit 5, permanent variieren oder sogar aktiv eine Parkposition einnehmen und nur am Stromnetz partizipieren, wenn der Preis dies hinreichend gewinnbringend macht oder um die technischen Ressourcen des Fahrzeugs besonders effizient zu nutzen. Hierdurch können die technischen Ressourcen des Fahrzeugs besonders vorteilhaft genutzt werden.

Während einer autonomen Fahrt des Fahrzeugs 1 erfolgt beispielsweise ein Ausgleich beziehungsweise ein Balancieren zwischen dem autonomen Fahren und dem Bereitstellen der Rechenleistung der Rechnereinheit 5. Während des Ladevorgangs ist das Grid-Computing aktiviert, und in Abhängigkeit von aktuellen Strompreisen empfängt der auch als Stromspeicher bezeichnete Energiespeicher 2 elektrische Energie aus dem elektrischen Stromnetz oder speist elektrische Energie in das Stromnetz ein. Etwaige Fahraufträge, die von dem Fahrzeug 1 zu erfüllen sind, werden dann beispielsweise zurückgestellt.

Alternativ oder zusätzlich können die folgenden vier Aktivitäten vorgesehen sein: Fahrdienst, Grid-Computing, Laden, Dienst als Stromspeicher. Unter dem Fahrdienst ist zu verstehen, dass das Fahrzeug 1 zum Transport wenigstens einer Person, mehrerer Personen und/oder zum Transport von Transportgut genutzt werden kann. Unter dem Grid-Computing ist zu verstehen, dass das Fahrzeug 1 die Rechenleistung der Rechnereinheit 5 dem Rechennetzwerk 7 beziehungsweise dem Verbund bereitstellen kann. Unter dem Laden ist zu verstehen, dass der Energiespeicher 2 elektrische Energie aus dem Stromnetz empfangen und in sich speichern kann. Unter dem Dienst als Stromspeicher ist zu verstehen, dass der Energiespeicher 2 elektrische Energie in das Stromnetz einspeisen kann. Die Planen der vier Aktivitäten erfolgt beispielsweise auf Basis von prädiktiven Daten und dabei in Abhängigkeit von Erfahrungswerten und/oder auf Basis einer zentralisierten Planung und/oder auf Basis einer dezentralen oder zentralen künstlichen Intelligenz. Zur Planung beziehungsweise zum Durchführen der vier Aktivitäten werden beispielsweise Navigationsdaten und/oder eine Ladesäulen-Nutzungsprädiktion und/oder Verkehrs- und Kundenprognosedaten genutzt, um die Aktivitäten zu optimieren.

Die Ladesäulen-Nutzungsprädiktion ist beispielsweise eine Voraussage oder Vorhersage über eine Nutzung einer Ladeeinrichtung zum Laden von Energiespeichern von Fahrzeugen mit elektrischer Energie, wobei die Ladeeinrichtung als eine Ladesäule ausgebildet sein kann. Die Ladesäulen-Nutzungsprädiktion kann beispielsweise anhand des Ladezustands des Energiespeichers des Fahrzeugs und/oder anhand von Ladezuständen von Energiespeichern anderer Fahrzeuge erfolgen, die sich beispielsweise in der Nähe der Ladeeinrichtung befinden. Alternativ oder zusätzlich wird bei der Ladesäulen-Nutzungsprädiktion eine geplante beziehungsweise ermittelte Fahrroute des Fahrzeugs und/oder der anderen Fahrzeuge berücksichtigt. Hierbei wird ermittelt, ob und welche Ladeeinrichtung sich gegebenenfalls entlang der jeweiligen Fahrroute befindet.

Beispielsweise erfolgt eine Gewichtung der Aktivitäten in Abhängigkeit von jeweiligen Wertigkeiten der Aktivitäten. Die Wertigkeit kann beispielsweise ein Preis oder ein Entgelt sein, den beziehungsweise das das Fahrzeug beziehungsweise dessen Eigentümer für die jeweilige Funktion erhält oder entrichten muss. Alternativ oder zusätzlich können die Aktivitäten in Abhängigkeit von einer Dringlichkeit der jeweiligen Funktionen gewichtet werden. Die Dringlichkeit beschreibt beispielsweise, wie schnell beziehungsweise in welcher Zeit das Fahrzeug von einem Startort entlang einer Fahrroute zu einem Zielort gefahren werden muss oder soll, um beispielsweise, insbesondere spätestens, zu einem vorgegebenen oder vorgebbaren Zeitpunkt den Zielort zu erreichen. Durch die Gewichtung der Funktionen können technische Funktionen beziehungsweise Ressourcen des Fahrzeugs effizient genutzt werden.

Während des Ladevorgangs befindet sich das Fahrzeug in einem Stillstand. Dann kann das zuvor genannte Kühlmedium zur Realisierung einer Zusatzkühlung insbesondere der Rechnereinheit 5 genutzt werden. Der Kühlanschluss 12 ist beispielsweise derart ausgestaltet, dass er in einen Stromanschluss des Fahrzeugs 1 integriert ist beziehungsweise dass der Stromanschluss und der Kühlanschluss 12 derart kombiniert sind, dass das elektrische Verbinden des Fahrzeugs 1 mit dem Stromnetz beziehungsweise mit der Ladeinfrastruktur 4 gleichzeitig einhergeht mit dem Verbinden des Kühlanschlusses 12 mit der fahrzeugexternen Kühleinrichtung. Hierdurch erhält das Fahrzeug 1 Zugang zu externen Medien wie beispielsweise Luft und/oder Flüssigkeit für die Kühlung wenigstens einer Komponente oder mehrerer Komponenten des Fahrzeugs 1. Mittels des jeweiligen Mediums kann beispielsweise die Rechnereinheit 5 und/oder wenigstens eine andere Komponente wie beispielsweise der Energiespeicher 2 gekühlt werden, insbesondere während der Energiespeicher 2 elektrische Energie aus dem Stromnetz empfängt oder in das Stromnetz einspeist. Hierdurch können übermäßige Temperaturen des Fahrzeugs 1 vermieden werden.

Vorzugsweise ist es vorgesehen, dass dem Rechennetzwerk 7 die Rechenleistung der Rechnereinheit 5 gegen ein Entgelt zu Verfügung gestellt wird, sodass das Fahrzeug 1 beziehungsweise dessen Nutzer beziehungsweise Eigentümer ein Entgelt dafür erhält, dass die Rechenleistung der Rechnereinheit 5 dem Rechennetzwerk 7 zur Verfügung gestellt wird. Hierzu wird beispielsweise ein Entgeltwert bestimmt, welcher die Rechenleistung charakterisiert, die dem Rechennetzwerk 7 von der Rechnereinheit 5 bereitgestellt wird beziehungsweise wurde. Beispielsweise erfolgt eine Wertung der insgesamt bereitgestellten und durchgeführten Rechenoperationen, wobei es sich beispielsweise um Integer - und/oder Floating-Point-Operationen handeln kann. Alternativ oder zusätzlich erfolgt eine Bewertung von berechneten und übergebenen Kryptowährungseinheiten und/oder von berechneten Integrationsbeträgen und/oder einer spezifischen Berechnungsgröße im teilnehmenden Rechennetzwerk 7.

Empfängt beispielsweise der Energiespeicher 2 elektrische Energie aus dem Stromnetz, so entnimmt der Energiespeicher 2 eine auch als Strommenge bezeichnete Energiemenge aus dem Stromnetz. Beispielsweise erfolgt eine Unterscheidung zwischen Ladestrom und Rechenstrom. Unter dem Ladestrom ist beispielsweise ein erster Teil der von dem Energiespeicher 2 aus dem Stromnetz empfangenen Energie zu verstehen, wobei beispielsweise der Rechenstrom ein zweiter Teil der von dem Energiespeicher 2 aus dem Stromnetz empfangenen elektrischen Energie ist. Mit dem Ladestrom wird der Energiespeicher 2 aufgeladen, indem der Ladestrom in dem Energiespeicher 2 gespeichert wird. Mittels des Rechenstroms wird die Rechnereinheit 5 betrieben, um deren Rechenleistung dem Rechennetzwerk 7 bereitzustellen, das heißt zur Verfügung zu stellen. Beispielsweise erfolgt eine Auswertung der Strommenge und einer jeweiligen Zeit eines Transferpreises. Ferner erfolgt beispielsweise eine Berechnung einer Gewinnoption durch eine Gegenüberstellung des Ladens, des Bereitstellens der Rechenleistung und des Dienstes als Stromspeicher, insbesondere in einem aktuellen Verrechnungszeitraum. Beispielsweise erfolgen eine Online-Auswertung und eine Online-Berechnung. Bewertet und berücksichtigt werden dabei beispielsweise die Zugänglichkeit und der Aufwand, um zur Ladeinfrastruktur 4 zu gelangen im Vergleich zu einer anderen Nutzung. Unter der Zugänglichkeit und dem Aufwand ist beispielsweise der Aufwand zu verstehen, der von dem Fahrzeug beziehungsweise dem Eigentümer und/oder Fahrer des Fahrzeugs aufgewendet werden muss, um zu der Ladeinfrastruktur zu gelangen und/oder das Fahrzeug 1 mit der Ladeinfrastruktur 4 zu verbinden. Insbesondere kann der Aufwand eine Strecke umfassen, die von dem Fahrzeug zurückgelegt werden muss, um zu der Ladeinfrastruktur 4 zu gelangen.

Alternativ oder zusätzlich zu Bitcoins sind andere Kryptowährungen wie beispielsweise Ethereum oder dergleichen verwendbar. Beispielsweise erfolgt eine Berechnung mittels einer Anwendungssoftware in einem Computernetzwerk, welches auch als Computational Grid bezeichnet wird, beispielsweise zum Lösen und/oder Berechnen von mathematischen Aufgaben. Mit anderen Wort können beispielsweise Kryptowährungen wie Bitcoin, Ether, EOS und/oder andere Währungen berechnet und geschürft werden. Wenigstens eine oder mehrere Blockchains beziehungsweise deren Berechnung kann zur Gebührenberechnung beziehungsweise zur Berechnung des Entgelts verwendet werden. Weitere Einsatzmöglichkeiten sind beispielsweise das Abhandeln von Transaktionen von Fahraufträgen ohne Mittelsmann, ein Zugang zu dem Fahrzeug 1 und/oder eine Basis für automobile Liefer- und Logistikketten.

Das Fahrzeug 1 kann beispielsweise Leistungen oder Dienste erbringen, das heißt bereitstellen oder Leisten. Bei einer solchen, von dem Fahrzeug 1 erbrachten Leistung beziehungsweise bei einem solchen, von dem Fahrzeug 1 erbrachten Dienst kann es sich um das Bereitstellen der Rechenleistung, das heißt darum handeln, dass die Rechnereinheit 5 dem Rechennetzwerk 7 beziehungsweise dem Verbund die Rechenleistung zur Verfügung stellt. Bei einer weiteren, von dem Fahrzeug 1 erbrachten Leistung beziehungsweise bei einem weiteren, von dem Fahrzeug erbrachten Dienst kann es sich um ein Einspeisen von in dem Energiespeicher 2 gespeicherter elektrischer Energie in das bezüglich des Fahrzeug 1 externe Stromnetz handeln. Das Einspeisen von elektrischer Energie aus dem Energiespeicher 2 in das Stromnetz ist eine Leistung beziehungsweise ein Dienst, die beziehungsweise der von dem Fahrzeug 1, insbesondere während des Bereitstellens der Rechenleistung, erbracht wird.

Ferner kann das Fahrzeug 1 Leistungen oder Dienste beziehen, empfangen oder nutzen. Bei einer solchen, von dem Fahrzeug 1 genutzt Leistung kann es sich um von dem Stromnetz bereitgestellte elektrische Energie beziehungsweise elektrischen Strom handeln, die beziehungsweise von dem Fahrzeug 1 genutzt wird, um den Energiespeicher 2 zu laden und/oder die Rechnereinheit 5 zu betreiben. Beispielsweise kann vorgesehen sein, dass das Fahrzeug während eines ersten Zeitintervalls, elektrische Energie aus dem Energiespeicher 2 in das Stromnetz einspeist. Während eines zweiten Zeitintervalls kann das Fahrzeug die Rechenleistung der Rechnereinheit 5 zur Verfügung stellen. Das erste Zeitintervall kann vollständig oder nur teilweise mit dem zweiten Zeitintervall zusammenfallen beziehungsweise vollständig oder nur teilweise das zweite Zeitintervall überlappen, oder das erste Zeitintervall und das zweite Zeitintervall folgen jeweils komplett zeitlich aufeinander. Während eines dritten Zeitintervalls, insbesondere des Ladevorgangs, kann das Fahrzeug 1 elektrische Energie aus dem Stromnetz beziehen, das heißt empfangen. Das dritte Zeitintervall kann vollständig oder nur teilweise mit dem zweiten Zeitintervall zusammenfallen beziehungsweise vollständig oder nur teilweise das zweite Zeitintervall überlappen, oder das dritte Zeitintervall und das zweite Zeitintervall folgen jeweils komplett zeitlich aufeinander.

Die von dem Stromnetz durch das Fahrzeug 1 empfangene elektrische Energie kann vollständig genutzt werden, um den Energiespeicher 2 zu laden. Alternativ kann die von dem Stromnetz durch das Fahrzeug 1 empfangene elektrische Energie vollständig genutzt werden, um die Rechnereinheit 5 zu Betreiben und deren Rechenleistung zur Verfügung zu stellen. Ferner ist es denkbar, dass ein gegenüber Null größerer erster Teil der von dem Stromnetz bereitgestellten und durch das Fahrzeug 1 empfangenen elektrischen Energie genutzt wird, um den Energiespeicher 2 mittels des ersten Teils zu laden. Außerdem wird beispielsweise ein gegenüber Null größerer zweiter Teil der von dem Stromnetz bereitgestellten und durch das Fahrzeug 1 empfangenen elektrischen Energie genutzt, um die Rechnereinheit 5 mittels des zweiten Teils zu betreiben und somit die Rechenleistung zur Verfügung zu stellen.

Eine weitere, von dem Fahrzeug 1 empfangene, bezogene oder genutzte Leistung kann darin bestehen, dass das Fahrzeug 1das Kühlmedium von der bezüglich des Fahrzeugs 1 externen Kühleinrichtung 11 empfängt und zum Kühlen des Energiespeichers 2 und/oder der Rechnereinheit 5 nutzt.

Für die jeweilige, von dem Fahrzeug 1 erbrachte Leistung kann ein jeweiliger Erbringungswert berechnet werden, insbesondere mittels der Rechnereinheit 5 des Fahrzeugs und/oder mittels einer bezüglich des Fahrzeugs 1 externen elektronischen Recheneinrichtung wie beispielsweise mittels des Servers 10, des Rechennetzwerks 7 und/oder des Verbunds. Ferner ist es denkbar, für einige der erbrachten Leistungen und/oder für alle erbrachten Leistungen ein Gesamterbringungswert zu berechnen. Der Erbringungswert charakterisiert die jeweilige erbrachte Leistung, insbesondere deren Wert oder Wertigkeit. Dementsprechend charakterisiert der Gesamterbringungswert eine Summe oder eine Gesamtheit der erbrachten Leistungen, insbesondere einen Wert oder eine Wertigkeit der erbrachten Leistungen insgesamt.

Für die jeweilige, von dem Fahrzeug 1 genutzte Leistung kann ein jeweiliger Nutzungswert berechnet werden, insbesondere mittels der Rechnereinheit d5 es Fahrzeugs 1 und/oder mittels einer bezüglich des Fahrzeugs 1 externen elektronischen Recheneinrichtung wie beispielsweise mittels des Servers 10, des Rechennetzwerks 7 und/oder des Verbunds. Ferner ist es denkbar, für einige der genutzten Leistungen und/oder für alle genutzten Leistungen ein Gesamtnutzungswert zu berechnen. Der Nutzungswert charakterisiert die jeweilige genutzte Leistung, insbesondere deren Wert oder Wertigkeit. Dementsprechend charakterisiert der Gesamtnutzungswert eine Summe oder eine Gesamtheit der genutzten Leistungen, insbesondere einen Wert oder eine Wertigkeit der genutzten Leistungen insgesamt.

Der Erbringungswert beziehungsweise der Gesamterbringungswert charakterisiert beispielsweise einen Preis oder ein Entgelt, der beziehungsweise das dem Fahrzeug 1, insbesondere dessen Eigentümer, für die erbrachte Leistung oder für die erbrachten Leistungen zusteht. Der Nutzungswert beziehungsweise der Gesamtnutzungswert charakterisiert beispielsweise einen Preis oder ein Entgelt, der beziehungsweise das von dem Fahrzeug 1, insbesondere von dessen Eigentümer, für die genutzte Leistung oder für die genutzten Leistungen entrichten muss.

Es ist nun denkbar, den jeweiligen Nutzungswert beziehungsweise den Gesamtnutzungswert und den jeweiligen Erbringungswert beziehungsweise den Gesamterbringungswert jeweils einzeln abzurechnen. Alternativ oder zusätzlich werden das dem Fahrzeug 1 beziehungsweise dessen Eigentümer zustehende Entgelt und das von dem Fahrzeug 1 beziehungsweise von dessen Eigentümer zu entrichtende Entgelt einzeln abgerechnet. Bei dem einzelnen Abrechnen ist es beispielsweise vorgesehen, dass das Fahrzeug 1 beziehungsweise der Eigentümer den jeweiligen Erbringungswert, den Gesamterbringungswert und/oder das dem Fahrzeug 1 zustehende Entgelt erhält, insbesondere empfängt, und dass das Fahrzeug 1 beziehungsweise der Eigentümer den jeweiligen Nutzungswert, den Gesamtnutzungswert und/oder das zu entrichtende Entgelt entrichtet, das heißt sendet. Das Senden und/oder Empfangen des jeweiligen Nutzungswert, des Gesamtnutzungswerts, des jeweiligen Erbringungswerts, des Gesamterbringungswerts, des dem Fahrzeug zustehenden Entgelts und/oder des zu entrichtenden Entgelts erfolgt beispielsweise mittels wenigstens eines Blockchain-Verfahren beziehungsweise über wenigstens ein Blockchain-Verfahren. Das Senden und/oder empfangen erfolgt beispielsweise Daten- und/oder Kommunikationsverbindung, über welche beispielsweise das Fahrzeug, insbesondere die Rechnereinheit, mit dem Rechennetzwerk und/oder mit dem Verbund und/oder mit der Ladeinfrastruktur 4, insbesondere während des Ladevorgangs und/oder während des Bereitstellens der Rechenleistung, kommuniziert. Die Daten- und/oder Kommunikationsverbindung kann kabel- beziehungsweise leitungsgebunden oder aber leitungslos sein und/oder über das Internet erfolgen.

Ferner ist es denkbar, dass der jeweilige Erbringungswert und der jeweilige Nutzungswert beziehungsweise der Gesamterbringungswert und der Gesamtnutzungswert beziehungsweise das jeweilige, dem Fahrzeug 1 zustehende Entgelt und das jeweilige, zu entrichtende Entgelt, insbesondere miteinander, verrechnet werden. Es wird sozusagen eine Bilanz der erbrachten und genutzten Leistungen erstellt beziehungsweise die erbrachten Leistungen, insbesondere deren Wertigkeiten, werden den genutzten Leistungen, insbesondere deren Wertigkeiten, gegenübergestellt.

Haben die erbrachten Leistungen die gleiche Wertigkeit wie die genutzten Leistungen, so erhält das Fahrzeug 1 kein Entgelt, und das Fahrzeug 1 muss auch kein Entgelt entrichten. Mit anderen Wort empfängt das Fahrzeug kein Entgelt beziehungsweise kein Erbringungswert und kein Gesamterbringungswert, und das Fahrzeug 1 sendet kein Entgelt beziehungsweise kein Nutzungswert und kein Gesamtnutzungswert. Sind die von dem Fahrzeug 1 genutzten beziehungsweise empfangenen Dienste höherwertig als die erbrachten Dienste, so entrichtet beziehungsweise sendet das Fahrzeug 1 ein Entgelt beziehungsweise den jeweiligen Nutzungswert oder Gesamtnutzungswert. Das Fahrzeug 1 empfängt oder erhält jedoch keinen Erbringungswert, Gesamterbringungswert oder Entgelt. Sind die von dem Fahrzeug 1 erbrachten Dienste höherwertig als die genutzten Dienste, so erhält beziehungsweise empfängt das Fahrzeug 1 ein Entgelt beziehungsweise den jeweiligen Erbringungswert oder Gesamterbringungswert. Das Fahrzeug 1 sendet oder entrichtet jedoch keinen Nutzungswert, Gesamtnutzungswert oder Entgelt.

Sind beispielsweise das Empfangen von von dem Stromnetz bereitgestellter elektrischer Energie durch das Fahrzeug 1 und das Bereitstellen der Rechenleistung gleichwertig, so erfolgt weder ein Empfangen noch ein Senden von Entgelt durch das Fahrzeug 1. Wird ein Entgelt an das und/oder von dem Fahrzeug 1 gesendet und/oder von dem Fahrzeug 1 empfangen, so erfolgt das Senden und/oder Empfangen vorzugsweise über ein Blockchain-Verfahren. Mit anderen Worten ist es vorzugsweise vorgesehen, dass ein beziehungsweise das Entgelt über wenigstens ein Blockchain-Verfahren gesendet und/oder empfangen wird.

## Patentansprüche

1. Verfahren zur Nutzung einer Rechnereinheit (5) eines autonom bewegbaren Fahrzeuges (1), wobei bei einem Ladevorgang eines elektrischen Energiespeichers (2) des Fahrzeuges (1) eine Rechenleistung der Rechnereinheit (5) zumindest einem fahrzeugexternen Rechennetzwerk (7) und/oder einem Verbund von fahrzeugexternen Recheneinheiten (8) zur Verfügung gestellt wird, wobei während zumindest eines Teils des Ladevorgangs der Energiespeicher (2) des Fahrzeugs (1) elektrische Energie aus einem bezüglich des Fahrzeugs (1) externen Stromnetz (4) empfängt und speichert und elektrische Energie in ein bezüglich des Fahrzeugs (1) externes Stromnetz (4) einspeist, wodurch ein bidirektionales Laden realisiert ist, und wobei der Energiespeicher (2) in Abhängigkeit von einem Preis für aus dem Stromnetz (4) entnommene Energie und/oder in Abhängigkeit von einem Preis für in das Stromnetz (4) eingespeiste Energie und/oder in Abhängigkeit von Wertigkeiten und/oder einer Gewichtung von von dem Fahrzeug (1) erbrachten und/oder genutzten Funktionen während des Teils die elektrische Energie von dem Stromnetz (4) empfängt und/oder in das Stromnetz (4) einspeist und das Fahrzeug (1) während des Ladevorgangs über wenigstens eine Kühlleitung wenigstens ein von einer bezüglich des Fahrzeugs (1) externen Kühleinrichtung (11) während des Ladevorgangs bereitgestelltes Kühlmedium empfängt, mittels welchem zumindest eine Komponente, insbesondere der Energiespeicher (2) und/oder die Rechnereinheit (5), des Fahrzeugs (1) während des Ladevorgangs gekühlt wird.

2. Verfahren nach Anspruch 1,
**dadurch gekennzeichnet, dass**
mittels einer Anzahl von Rechnereinheiten (5) autonom bewegbarer Fahrzeuge (1) ein virtueller Hochleistungsrechner (9) gebildet wird, der von einem Server (10) zentral verwaltet wird.

3. Verfahren nach Anspruch 1 oder 2,
**dadurch gekennzeichnet, dass**
die Rechenleistung gegen Entgelt zur Verfügung gestellt wird.

4. Verfahren nach Anspruch 2 oder 3,
**dadurch gekennzeichnet, dass**
die Kommunikation mit dem Server (10) über eine Datenschnittstelle (6) des Fahrzeuges (1) erfolgt.

5. Verfahren nach Anspruch 3 oder nach Anspruch 4 in dessen Rückbezug auf Anspruch 3,
**dadurch gekennzeichnet, dass**
das Entgelt in Abhängigkeit von einer Anzahl an mittels der Rechnereinheit (5) durchgeführten und dem Rechennetzwerk (7) und/oder dem Verbund bereitgestellten Rechenoperationen ermittelt wird.

6. Verfahren nach Anspruch 3 oder nach Anspruch 4 in dessen Rückbezug auf Anspruch 3 oder nach Anspruch 5,
**dadurch gekennzeichnet, dass**
das Entgelt über wenigstens ein Blockchain-Verfahren empfangen wird.

7. Verfahren nach einem der vorhergehenden Ansprüche,
**dadurch gekennzeichnet, dass**
die Rechenleistung der Rechnereinheit (5) in Abhängigkeit von einem Ladezustand des Energiespeichers (2) des Fahrzeugs (1) dem Rechnernetzwerk (7) und/oder dem Verbund zur Verfügung gestellt wird.

8. Verfahren nach Anspruch 7,
**dadurch gekennzeichnet, dass**
die dem Rechennetzwerk (7) und/oder dem Verbund zur Verfügung gestellte Rechenleistung der Rechnereinheit (5) des Fahrzeugs (1) mit zunehmender, in dem Energiespeicher (2) des Fahrzeugs (1) gespeicherter Menge an elektrischer Energie erhöht wird.

9. Verfahren nach einem der vorhergehenden Ansprüche,
**dadurch gekennzeichnet, dass**
die Rechenleistung der Rechnereinheit (5) in Abhängigkeit von prädiktiven Daten zur Verfügung gestellt wird.

10. Verfahren nach Anspruch 9,
**dadurch gekennzeichnet, dass**
die prädiktiven Daten einen erwarteten, zukünftigen Ladezustand des Energiespeichers (2) und/oder eine geplante Fahrroute des Fahrzeugs (1) und/oder eine erwartete, zukünftige Temperatur und/oder eine erwartete, zukünftige Umgebungsbedingung einer erwarteten, zukünftigen Umgebung des Fahrzeugs (1) und/oder einen Zeitpunkt eines erwarteten, zukünftigen Beginns einer Fahrt des Fahrzeugs (1) und/oder einen erwarteten, zukünftigen Zustand des Rechennetzwerks (7) und/oder des Verbunds und/oder eines bezüglich des Fahrzeugs (1) externen Stromnetzes (4) umfassen.

11. Verfahren nach einem der vorhergehenden Ansprüche,
**dadurch gekennzeichnet, dass**
die Rechnereinheit (5) über wenigstens eine kabellose Datenverbindung und/oder über wenigstes eine physische Datenleitung mit dem Rechennetzwerk (7) und/oder dem Verbund gekoppelt ist.

12. Fahrzeug, ausgebildet zum Durchführen eines Verfahrens nach Ansprüche 1 bis 11, wobei
das Fahrzeug ein autonomes Fahrzeug ist.

## Claims

1. Method for using a computer unit (5) of an autonomously movable vehicle (1), wherein, during a charging process of an electrical energy store (2) of the vehicle (1), a computing power of the computer unit (5) is made available to at least one vehicle-external computing network (7) and/or a group of vehicle-external computing units (8), wherein, during at least part of the charging process, the energy store (2) of the vehicle (1) receives and stores electrical energy from a power grid (4) external to the vehicle (1) and feeds electrical energy into a power grid (4) external to the vehicle (1), thus implementing bidirectional charging, and wherein the energy store (2), depending on a price for energy taken from the power grid (4) and/or depending on a price for energy fed into the power grid (4) and/or depending on priorities and/or a weighting of functions performed and/or used by the vehicle (1), during the part of the charging process, receives the electrical energy from the power grid (4) and/or feeds it into the power grid (4) and the vehicle, during the charging process, receives via at least one cooling line a cooling medium which is provided by a cooling device (11) external to the vehicle during the charging process and by means of which at least one component, in particular the energy store (2) and/or the computer unit (5), of the vehicle (1) is cooled during the charging process.

2. Method according to claim 1,
**characterized in that**
a virtual high-performance computer (9), which is managed centrally by a server (10), is formed by means of a number of computer units (5) of autonomously movable vehicles (1).

3. Method according to either claim 1 or claim 2,
**characterized in that**
the computing power is made available against remuneration.

4. Method according to claim 2 or 3,
**characterized in that**
the communication with the server (10) takes place via a data interface (6) of the vehicle (1).

5. Method according to claim 3 or according to claim 4 in the back-reference thereof to claim 3,
**characterized in that**
the remuneration is determined depending on a number of computing operations carried out by means of the computer unit (5) and provided to the computing network (7) and/or the group.

6. Method according to claim 3 or according to claim 4 in the back-reference thereof to claim 3 or according to claim 5,
**characterized in that**
the remuneration is received via at least one blockchain method.

7. Method according to any of the preceding claims,
**characterized in that**
the computing power of the computer unit (5) is made available to the computer network (7) and/or the group depending on a state of charge of the energy store (2) of the vehicle (1).

8. Method according to claim 7,
**characterized in that**
the computing power of the computer unit (5) of the vehicle (1) made available to the computing network (7) and/or the group is increased with an increasing amount of electrical energy stored in the energy store (2) of the vehicle (1).

9. Method according to any of the preceding claims,
**characterized in that**
the computing power of the computer unit (5) is made available depending on predictive data.

10. Method according to claim 9,
**characterized in that**
the predictive data comprises an expected future state of charge of the energy store (2) and/or a planned route of the vehicle (1) and/or an expected future temperature and/or an expected future environmental condition of an expected future environment of the vehicle (1) and/or a time of an expected future start of a journey of the vehicle (1) and/or an expected future state of the computing network (7) and/or of the group and/or of a power grid (4) external to the vehicle (1).

11. Method according to any of the preceding claims,
**characterized in that**
the computer unit (5) is coupled to the computing network (7) and/or the group via at least one wireless data connection and/or via at least one physical data line.

12. Vehicle designed for carrying out a method according to claims 1 to 11, wherein the vehicle is an autonomous vehicle.

## Revendications

1. Procédé permettant d'utiliser une unité de calcul (5) d'un véhicule (1) mobile de manière autonome, dans lequel, lors d'un processus de charge d'un accumulateur d'énergie (2) électrique du véhicule (1), une puissance de calcul de l'unité de calcul (5) est mise à la disposition d'au moins un réseau de calcul (7) externe au véhicule et/ou d'un ensemble d'unités de calcul (8) externes au véhicule, dans lequel, pendant au moins une partie du processus de charge, l'accumulateur d'énergie (2) du véhicule (1) reçoit et accumule de l'énergie électrique en provenance d'un réseau électrique (4) externe par rapport au véhicule (1) et injecte de l'énergie électrique dans un réseau électrique (4) externe par rapport au véhicule (1), moyennant quoi une charge bidirectionnelle est réalisée, et dans lequel l'accumulateur d'énergie (2), en fonction d'un prix pour de l'énergie prélevée du réseau électrique (4) et/ou en fonction d'un prix pour de l'énergie injectée dans le réseau électrique (4) et/ou en fonction de valeurs et/ou d'une pondération de fonctions fournies et/ou utilisées par le véhicule (1) pendant la partie, reçoit l'énergie électrique en provenance du réseau électrique (4) et/ou l'injecte dans le réseau électrique (4) et le véhicule (1) reçoit, pendant le processus de charge, par l'intermédiaire d'au moins une conduite de refroidissement, au moins un fluide de refroidissement fourni par un dispositif de refroidissement (11) externe par rapport au véhicule (1) pendant le processus de charge, au moyen duquel fluide de refroidissement au moins un composant, en particulier l'accumulateur d'énergie (2) et/ou l'unité de calcul (5), du véhicule (1) est refroidi pendant le processus de charge.

2. Procédé selon la revendication 1,
**caractérisé en ce que**
au moyen d'un certain nombre d'unités de calcul (5) de véhicules (1) mobiles de manière autonome, un calculateur haute performance virtuel (9) géré de manière centralisée par un serveur (10) est formé.

3. Procédé selon la revendication 1 ou 2,
**caractérisé en ce que**
la puissance de calcul est mise à disposition contre rémunération.

4. Procédé selon la revendication 2 ou 3,
**caractérisé en ce que**
la communication avec le serveur (10) est effectuée par l'intermédiaire d'une interface de données (6) du véhicule (1).

5. Procédé selon la revendication 3 ou selon la revendication 4 lorsqu'elle dépend de la revendication 3,
**caractérisé en ce que**
la rémunération est déterminée en fonction d'un certain nombre d'opérations de calcul exécutées au moyen de l'unité de calcul (5) et fournies au réseau de calcul (7) et/ou à l'ensemble.

6. Procédé selon la revendication 3 ou selon la revendication 4 lorsqu'elle dépend de la revendication 3, ou selon la revendication 5,
**caractérisé en ce que**
la rémunération est reçue par l'intermédiaire d'au moins un procédé de chaîne de blocs.

7. Procédé selon l'une des revendications précédentes,
**caractérisé en ce que**
la puissance de calcul de l'unité de calcul (5) est mise à la disposition du réseau de calcul (7) et/ou de l'ensemble en fonction d'un état de charge de l'accumulateur d'énergie (2) du véhicule (1).

8. Procédé selon la revendication 7,
**caractérisé en ce que**
la puissance de calcul, mise à la disposition du réseau de calcul (7) et/ou de l'ensemble, de l'unité de calcul (5) du véhicule (1) augmente lorsque la quantité d'énergie électrique accumulée dans l'accumulateur d'énergie (2) du véhicule (1) croît.

9. Procédé selon l'une des revendications précédentes,
**caractérisé en ce que**
la puissance de calcul de l'unité de calcul (5) est mise à disposition en fonction de données prédictives.

10. Procédé selon la revendication 9,
**caractérisé en ce que**
les données prédictives comprennent un état de charge futur attendu de l'accumulateur d'énergie (2) et/ou un itinéraire planifié du véhicule (1) et/ou une température future attendue et/ou une condition d'environnement future attendue d'un environnement futur attendu du véhicule (1) et/ou une heure d'un début futur attendu d'un trajet du véhicule (1) et/ou un état futur attendu du réseau de calcul (7) et/ou de l'ensemble et/ou d'un réseau électrique (4) externe par rapport au véhicule (1).

11. Procédé selon l'une des revendications précédentes,
**caractérisé en ce que**
l'unité de calcul (5) est couplée au réseau de calcul (7) et/ou à l'ensemble par l'intermédiaire d'au moins une liaison de données sans fil et/ou par l'intermédiaire d'au moins une ligne de données physique.

12. Véhicule, configuré pour la mise en oeuvre d'un procédé selon les revendications 1 à 11, dans lequel le véhicule est un véhicule autonome.
